# EUROPÄISCHE PATENTSCHRIFT

(11) **EP 4 418 507 B1**
(45) Veröffentlichungstag und Bekanntmachung des Hinweises auf die Patenterteilung: **21.10.2026**
(21) Anmeldenummer: 24180243.8
(22) Anmeldetag: 25.01.2021
(51) Int. Cl.: C09D 163/00, H02K 15/02

(54) **VERFAHREN ZUM HERSTELLEN EINES BLECHPAKETS**
METHOD FOR PRODUCING A LAMINATED CORE
PROCÉDÉ DE FABRICATION D'UN PAQUET DE TÔLES

(30) Priorität: 09.04.2020 DE 102020109985
(43) Veröffentlichungstag der Anmeldung: 21.08.2024
(62) Dokumentnummer(n) der früheren Anmeldung(en) nach Art. 76 EPÜ: 21702198.9 / 4 062 523
(73) Patentinhaber: ThyssenKrupp Steel Europe AG, 47166 Duisburg (DE)
(72) Erfinder: LEWE, Tobias, 48147 Münster (DE); MACHALITZA, Karsten, 45473 Mülheim an der Ruhr (DE); WIETHOFF, Christian, 45768 Marl (DE); TIETZ, Marco, 40489 Düsseldorf (DE); KAMEN, Volker, 44653 Herne (DE); HENNIG, Anne, 59199 Bönen (DE); SCHREIER, Dirk, 08315 Lauter-Bernsbach (DE)
(74) Vertreter: Zenz Patentanwälte Partnerschaft mbB

(56) Entgegenhaltungen:
- EP-A1- 2 883 692
- WO-A1-2019/088618
- DE-A1- 102012 001 744

## Beschreibung

Die vorliegende Erfindung betrifft ein Verfahren zum Herstellen eines Blechpakets.

Die Funktionsweise von elektrischen Maschinen unterschiedlicher Weise, und im Besonderen von Elektromotoren, ist seit langem bekannt. Nicht zuletzt vor dem Hintergrund der zunehmenden Verwendung von Elektromotoren im individualisierten Personenkraftverkehr, oft auch unter dem Schlagwort der Elektromobilität angesprochen, gewinnt der Elektromotor weiter an Bedeutung. Wesentliche Bestandteile jedes Elektromotors sind ein Stator und ein Rotor, wobei der Begriff des Stators einen feststehenden Teil des Motors bezeichnet und der Begriff des Rotors einen sich bewegenden Teil des Motors bezeichnet.

Eine Herausforderung bei Bereitstellung von Elektromotoren ist, die Effizienz des Elektromotors, beispielsweise die bereitgestellte Leistung pro Volumen und/oder den Wirkungsgrad, im Rahmen eines wirtschaftlich sinnvollen Aufwands zu erhöhen.

Ein Konzept zur Bereitstellung von effizienten Elektromotoren ist die Herstellung von Statoren und/oder Rotoren oder von Teilen der Statoren und/oder Rotoren als sogenanntes Statorpaket beziehungsweise Rotorpaket. Andere herzustellende Bauteile sind Polkerne oder Segmente. Hierbei werden die genannten Bauteile als Blechpakete, auch als Lamellenpakete bezeichnet, aus einzelnen sogenannten Lamellen zusammengesetzt. Der Begriff der Lamelle bezeichnet ein Formteil, welches beispielsweise aus einem Elektroblech oder einem Elektroband ausgenommen wurde, beispielsweise mittels Stanzens. Die Lamellenpakete bestehen aus einer Vielzahl von dünnen Lamellen, die miteinander gestapelt und gegeneinander, bereichsweise oder bevorzugt vollständig, voneinander elektrisch isoliert sind. Für derartige Zwecke ist aus der Praxis beispielsweise die Nutzung sogenannter Elektroisolierlacke bekannt, die in sogenannte Isolierklassen eingeordnet sind.

Die Herstellung eines derartigen Blechpakets umfasst stets die Schritte der Herstellung von Lamellen sowie der Verbindung der Lamellen miteinander. Die Verbindung wird dabei bevorzugt in einer Weise vorgenommen, dass die Lamellen nach dem Verbinden abschnittsweise, bevorzugt vollständig, elektrisch voneinander isoliert sind, das heißt bevorzugt: dass zwei benachbarte Lamellen keine galvanische Verbindung zueinander haben.

Die Herstellung der einzelnen Lamellen kann beispielsweise durch Stanzen erfolgen. Das Verbinden der gestanzten Lamellen zu einem Blechpaket kann durch eine Vielzahl bekannter Verfahren erfolgen, beispielsweise durch Verschrauben, durch Anlegen von Klammern, durch Verschweißen oder durch Stanzpaketieren. Jedes dieser genannten, dem Fachmann geläufigen, Herstellverfahren geht jedoch aufgrund der während der Verbindungsherstellung erzeugten mechanischen Einwirkung mit nachteiligem Einfluss auf die nach dem Verbinden vorherrschenden elektromagnetischen Eigenschaften des fertiggestellten Blechpakets einher. Insbesondere können mechanische Spannungen, die bei einer nach dem Stand der Technik hergestellten Verbindung zwangsläufig zumindest in gewissem Maße unvermeidlich sind, sich nachteilig auf die magnetischen Eigenschaften und den Verlauf von Magnetfeldlinien innerhalb des Blechpakets auswirken, woraus sich beispielsweise unmittelbar ein nachteiliger Einfluss auf die Effizienz eines daraus hergestellten Elektromotors ergibt. Eine bei einigen Verbindungsverfahren, beispielsweise Stanzpaketieren oder Schweißen auftretende elektrische Verbindung zwischen zwei oder mehr Lamellen führt zu zusätzlichen Verlusten.

Eine elegante Möglichkeit, den nachteiligen Einfluss mechanischer Einwirkung auf die Lamellen zu verringern und gleichzeitig eine gute Isolation der Lamellen zueinander zu erreichen, ist der Einsatz von Klebstoffen als Verbindungsmittel. Geeignete Klebstoffsysteme haben oft auch isolierende Eigenschaften analog zu Elektroisolierlacken.

Eine dem Fachmann bekannte Vorgehensweise hierfür ist der Einsatz sogenannter Backlacke. Der Einsatz von Backlacken zum Verkleben von gestanzten Elektroblechen wird beispielsweise in der DE 38 29 068 C1 beschrieben. Eine Vorgehensweise zum Einsatz von Backlack ist das Beschichten eines Blechs, insbesondere eines Blechbands, das nachfolgende Herausstanzen einzelner Lamellen aus dem Blech, das zueinander ausgerichtete Positionieren der einzelnen Lamellen zueinander und das nachfolgende Wärmebehandeln des sich ergebenden Blechstapels während eines definierten Zeitraums und bei einer definierten Temperatur. In vielen Fällen werden die Lamellen während der Wärmebehandlung gegeneinander verpresst, zum Beispiel durch eine stirnseitige Kraftbeaufschlagung, bevorzugt mit gleichmäßiger Flächenkraft, in eine axiale Richtung des Blechpakets, die in das Blechpaketinnere hineinweist. Typische Reaktionstemperaturen sind 150 Grad Celsius bis 250 Grad Celsius, eine typische Zeitdauer für ein Reagieren der Backlacke sind 30 bis 150 Minuten mit einer anschließenden Abkühlphase, wobei die genauen Parameter selbstverständlich von dem konkret verwendeten Backlack und der konkret vorliegenden Geometrie abhängt, da beispielsweise eine sich in dem Bauteil einstellende Kerntemperatur Einfluss auf den Verlauf des Backlackverfahrens hat. Mit dieser Vorgehensweise können im Allgemeinen hervorragende elektromagnetische Eigenschaften von Statorpaketen und/oder Rotorpaketen erreicht werden. Aufgrund der zeitaufwändigen Verfahrensweise ist jedoch unmittelbar ersichtlich, dass der Einsatz von Backlacken für eine kontinuierliche Massenproduktion nicht oder zumindest nicht optimal geeignet ist.

Eine Apparatur, mit der Lamellenstapel durch Stapeln und Verkleben von Lamellen hergestellt werden, wird in der WO 2019/088618 A1 beschrieben.

Die DE 10 2012 001 744 A1 beschreibt ein Verfahren, eine Vorrichtung und einen Klebstoff zur Herstellung eines Blechpakets aus mehreren aufeinander gestapelten Elektroblechen.

In der EP 2 883 692 A1 werden eine Vorrichtung und ein Verfahren zum Verbinden von Blechteilen zu einem Blechpaket beschrieben und erläutert.

Vor dem Hintergrund der erläuterten Konstellation ist Aufgabe der Erfindung, Voraussetzungen für eine im Produktionsumfeld effiziente Herstellung von Blechpaketen, also insbesondere Statorpaketen oder Rotorpaketen, zu schaffen.

Zusätzlich ist vor dem Hintergrund des Wunschs nach weiter erhöhter Effizienz ebenfalls Aufgabe der Erfindung, elektromagnetische Komponenten und elektrische Maschinen mit verbesserter Umsetzung der elektromagnetischen Energie in mechanische Energie oder umgekehrt bereitzustellen.

Die Aufgabe wird gelöst mit einem Verfahren nach Anspruch 1.

Das erfindungsgemäße Verfahren zum Herstellen eines Blechpakets für eine elektrische Maschine weist zumindest die folgenden Schritte auf:
A) Es wird ein Blech bereitgestellt, das mit einer zumindest teilweise aushärtbaren Klebstoffbeschichtung versehen ist. Das bedeutet, dass das Blech eine Klebstoffbeschichtung aufweist, die nach einer, beispielsweise thermisch ausgelösten, Aktivierung aushärtet und dadurch ihre Klebeigenschaften entfaltet. Bei der Klebstoffbeschichtung handelt es sich um eine Klebstoffbeschichtung auf Polymerbasis. Bevorzugt ist das Blech vollflächig mit der Klebstoffbeschichtung beschichtet, entweder einseitig oder, besonders bevorzugt, beidseitig. Bei dem Blech kann es sich beispielsweise um ein Elektroband handeln oder um eine aus einem Blechband abgetrennte Platine.
B) Das Blech wird in eine Inline-Anlage hineintransportiert. Die Inline-Anlage weist zumindest auf: ein Schneidmittel, ein Abtrennmittel sowie ein Aktivierungsmittel zum Aktivieren der Klebstoffbeschichtung. Das Aktivierungsmittel ist bevorzugt zwischen dem Schneidmittel und dem Abtrennmittel angeordnet.

Der Begriff der Inline-Anlage bezieht sich darauf, dass eine Anzahl von Bearbeitungsstationen, nämlich wenigstens die oben genannten, in einer vorgegebenen Reihenfolge angeordnet sind, und in die Inline-Anlage hineingeführtes Blech, beispielsweise Elektroband, automatisiert und sequentiell an den vorgegebenen Stationen bearbeitet werden.

Das Schneidmittel dient dem Bilden von Strukturen der herzustellenden Lamelle. Dies kann beispielsweise mehrschrittig mit einem Schneidmittel oder mehrschrittig mit unterschiedlichen Schneidmitteln, wobei in beiden Fällen bevorzugt eine mehrschrittige Strukturbildung bei einer Lamelle vom Inneren hin zum Äußeren erfolgt, das heißt: eine Anzahl von mehreren erforderlichen Schneidvorgängen wird bevorzugt derart vorgesehen, dass die Schneidvorgänge zuerst die in einer Lamelle innersten Strukturen bilden und sodann schrittweise zum Lamellenäußeren hin Schneidvorgänge erfolgen.

Das Schneidmittel kann beispielsweise als Stanzstempel ausgebildet sein. Das Schneiden des Schritts C) ist in diesem Fall ein Stanzen.

Das Schneidmittel kann auch als Laser ausgebildet sein. Das Schneiden des Schritts C) ist dann ein Laserstrahlschneiden.

Die Inline-Anlage kann auch eine Sequenz aus mehreren Schneidmitteln aufweisen, beispielsweise ausgebildet als Stanzwerkzeug mit mehreren sequentiell angeordneten Stanzstufen oder als Folge eines Stanzwerkzeugs und eines Lasers. Das wenigstens eine Schneidmittel kann als Folgeverbundwerkzeug ausgebildet sein, mit welchem die vorgegebene Geometrie der Lamelle in das Elektroband gestanzt wird, bevorzugt vom Lamelleninneren hin zum Lamellenäußeren.

Der Begriff der Lamelle bezeichnet in dem obigen Kontext ein durch Heraustrennen aus dem Blech gewonnenes Formteil, insbesondere ein durch Ausstanzen gewonnenes Formteil.

Das Aktivierungsmittel zum Aktivieren der Klebstoffbeschichtung ist in der Lage, einen Wärmeeintrag in die Klebstoffbeschichtung einzubringen, wobei die Erzeugung des Wärmeeintrags grundsätzlich auf beliebige Weise vorgenommen werden kann. Insbesondere kann das Aktivierungsmittel ein Mittel zur Ausgabe von Infrarotstrahlung aufweisen, beispielsweise einen NIR-Emitter, also ein Leuchtmittel, das zur Ausgabe von elektromagnetischer Strahlung im NIR-Wellenlängenspektrum, also mit Wellenlängen zwischen 400 nm und 10 µm, bevorzugt zwischen 780 nm bis 3 µm, ausgebildet ist.

Alternativ oder zusätzlich kann das Aktivierungsmittel eine Induktive Erwärmung, insbesondere Induktionsspulen, zum Erwärmen der Klebstoffbeschichtung aufweisen.

Weiterhin weist die Inline-Anlage, wie erwähnt, ein Abtrennmittel auf. Dieses Abtrennmittel ist bevorzugt als Ausschneidstempel ausgebildet, welcher durch zur Blechoberfläche senkrechte Kraftauswirkung die Lamellen sequentiell durch Trennen von dem das Lamellenäußere begrenzende Blech trennt und bevorzugt im selben Prozessschritt die Lamelle in eine unterhalb des Blechs angeordnete Aufnahmevorrichtung befördert, in welcher die Lamellen gesammelt werden. Bevorzugt stanzt der Ausschneidstempel die Lamelle in ihrer äußeren Begrenzung aus dem Blech aus. Besonders bevorzugt sind Schneidmittel und Abtrennmittel Bestandteil einer selben Presse mit dem Vorteil, dass eine hohe Synchronisierung der Stanz- und Auspressvorgänge vorliegt.

C) Mit dem Schneidmittel wird ein Formteil aus dem in Schritt A bereitgestellten Blech ausgeschnitten, beispielsweise in einem oder in mehreren Schritten ausgestanzt, beispielsweise eine Rotorlamelle oder eine Statorlamelle. Innerhalb der Inline-Anlage findet ein Schneiden einer elektrischen Komponente, insbesondere eines als Statorlamelle oder als Rotorlamelle ausgebildeten Formteils aus dem in Schritt A) bereitgestellten Blech mit dem Schneidmittel statt, wobei bevorzugt die Außenkonturen noch nicht gebildet werden, sondern die Außenkonturen erst in Schritt E) gebildet werden. Das Formteil weist in diesem Fall in Anschluss an Schritt C) alle Konturen aus außer seiner Außenkontur. Alternativ kann eine Ausführung vorgesehen sein, in dem das Schneiden des Formteils auch das Schneiden der Außenkontur umfasst.

D) Aktivieren der Klebstoffbeschichtung, bevorzugt vollflächiges Aktivieren der Klebstoffbeschichtung, mittels des Aktivierungsmittels zum Aktivieren der Klebstoffbeschichtung des Formteils. Bevorzugt erfolgt das Aktivieren des in Schritt C) gebildeten Formteils, das heißt: erfolgt das Aktivieren des Schritts D) nach dem Schneiden des Schritts C). Durch den Wärmeeintrag wird die Klebstoffbeschichtung aktiviert und das ausgestanzte Formteil ist in der Lage, eine Klebverbindung, also eine Vorfixierung, einzugehen. Der Begriff der Vorfixierung bezieht sich darauf, dass das Formteil für die weitere Bearbeitung ausreichend belastbar ist, jedoch noch keine für die industrielle Verwendung des fertigen Blechpakets ausreichende Fixierung vorliegt. Die Klebstoffverbindung ist wenigstens zum Teil chemisch ausgehärtet und kann im späteren Prozess durch Nachverdichtung unter Druck und/oder Temperatur in ihrer Endfestigkeit erhöht werden.

In einer speziellen Ausführungsform kann vorgesehen sein, dass die Aktivierungstemperatur in der Inline-Anlage zwischen 30 Grad Celsius und 180 Grad Celsius, bevorzugt zwischen 40 Grad Celsius und 120 Grad Celsius, besonders bevorzugt zwischen 50 Grad Celsius und 100 Grad Celsius beträgt.

E) Abtrennen des Formteils mit dem Abtrennmittel und, als Schritt F), ein Ablegen, bevorzugt über die Außengeometrie geführtes Ablegen, des Formteils in einem Positionierbereich zur Bildung eines Formteilstapels. Der Positionierbereich dient dem position- und/oder winkelausgerichteten Positionieren des Formteils auf andere Formteile, die bereits im Positionierbereich vorhanden sind. Dadurch wird, Formteil für Formteil sequentiell zunehmend, schließlich ein Stapel von gegeneinander ausgerichteten und mit aktiviertem Klebstoff versehenen Formteilen erhalten. Das bevorzugt als Ausstanzen ausgeführte Abtrennen der Lamelle aus dem Blech mit dem Abtrennmittel erfolgt bevorzugt im Rahmen eines selben Prozessschritts mit dem Ablegen des Formteils in dem Positionierbereich, das heißt: das Abtrennen des Schritts E) und das bevorzugte Verkleben der Lamelle mit der jeweils vorherigen Lamelle umfassende Ablegen des Schritts F) erfolgen bevorzugt in einem selben Prozessschritt und unter Führung und gegebenenfalls Druckausübung durch das Abtrennmittel auf den sich bildenden Formteilstapel.

Der Positionierbereich kann beispielsweise ein an die Außengeometrie des Formteils angepasstes zylindrisches Rohr sein, beispielsweise bei in einen Kreis eingeschriebenen Formteilen ein kreiszylindrisches Rohr, welches unterhalb der Beförderungsebene des Formteils liegt. Das Ausrichten des Formteils erfolgt durch den Positionierbereich, beispielsweise ausgebildet als zylindrisches Hohlrohr mit einem Mantelquerschnitt, der im Wesentlichen dem Querschnitt der Formteile entspricht und mit diesem in vorgesehener Positionierung ausgerichtet ist. Der Positionierbereich kann auch einem Abbild der Lamelle entsprechen und somit vollflächig im Kontakt mit dem Positionierbereich stehen.

G) Die Schritte C) bis F) werden in der vorgesehenen Reihenfolge, beispielsweise in der Reihenfolge C)->D)->E)->F) oder in der Reihenfolge C)->D)->E) gemeinsam mit F), wiederholt, wobei der Formteilstapel kontinuierlich gestapelt wird, das heißt kontinuierlich Formteile in den Positionierbereich positioniert werden. Bevorzugt erfolgt dies derart, dass der Positionierbereich kontinuierlich vollständig aufgefüllt ist.

Der gesamte Prozess kann auch mehrreihig sein, das heißt es werden parallel und/oder hintereinander zwei oder mehr als zwei Lamellen aus einem Elektroband (je nach Anzahl, Geometrie und Anordnung diagonal versetzt oder gedreht zueinander) ausgestanzt

Bei einer vorgegebenen erreichten Anzahl von Formteilen wird das dann nächste Formteil mittels einer Behandlungsvorrichtung wenigstens bereichsweise mit einem Behandlungsfluid versehen, sodass die Wirkung der Klebstoffbeschichtung, also die Klebkraft, verringert wird, das heißt: sie weist weniger oder keine Klebkraft mehr auf, sodass die Klebstoffbeschichtung an dieser Position eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt. Die Trennbarkeit liegt an der Klebstoffbeschichtung vor, sodass die Klebstoffbeschichtung als Sollbruchstelle bereitgestellt ist, an der die an der Klebstoffbeschichtung unmittelbar angrenzenden Lamellen leicht voneinander trennbar sind.

Mit anderen Worten: Bei kontinuierlicher Wiederholung der Schritte C) bis F) wird bei ausgewählten Formteilen mittels einer Behandlungsvorrichtung wenigstens bereichsweise ein Behandlungsfluid aufgetragen, sodass die Wirkung der Klebstoffbeschichtung, also die Klebkraft, dieser ausgewählten Formteile verringert wird und eine vereinfachte Trennbarkeit eines Stapelabschnitts unterhalb der wirkverringerten Klebstoffbeschichtung von einem Stapelabschnitt oberhalb der wirkverringerten Klebstoffbeschichtung vorliegt. Die Formteile werden derart als ausgewählte Formteile ausgewählt, dass der jeweils sich ergebende Stapelabschnitt mit einer gewünschten Formteilanzahl und damit einer gewünschten Formteilhöhe während kontinuierlicher Fortführung des Prozesses aus der Positioniervorrichtung, unterhalb der Aufnahmeseite der Positioniervorrichtung, abgetrennt werden kann und damit als Blechpaket bereitgestellt ist.

Es wird also kontinuierlich ein Formteilstapel gebildet, der in Stapelabschnitte unterteilt ist, wobei, bevorzugt kontinuierlich, jeweils ein Stapelabschnitt als Blechpaket von dem Formteilstapel getrennt wird.

Beispielsweise kann vorgesehen sein, dass mit jedem Formteil, dass an der Oberseite des Positionierbereichs auf den Formteilstapel abgelegt wird, an der Unterseite ein Hinausbewegen um die Dicke eines Formteils erfolgt und dass, sobald ein vollständiger Stapelabschnitt an der Unterseite ausgegeben ist, dieser abgetrennt wird und sodann als Blechpaket bereitsteht, während an der Oberseite kontinuierlich weiter aufgefüllt wird.

Neben dem Einsatz eines Behandlungsfluids kann auch zusätzlich, bevorzugt nur temporär bei Behandlung des ausgewählten Formteils, die Erwärmung, also das Aktivierungsmittel, im Bereich, in dem das Behandlungsfluid aufgebracht wird, deaktiviert werden.

Das wenigstens bereichsweise Versehen des Formteils mit dem Behandlungsfluid erfolgt vor Schritt F) aber bevorzugt vor Schritt E), außerdem bevorzugt nach Schritt C), besonders bevorzugt nach Schritt D), also besonders bevorzugt als zusätzlicher Schritt zwischen Schritt D) und Schritt E).

Bevorzugt wird das Formteil auf einer seiner Flächen vollflächig mit dem Behandlungsfluid versehen, alternativ wird das Formteil auf beiden seiner Flächen vollflächig mit dem Behandlungsfluid versehen.

Eine Variante sieht vor, dass das Formteil auf einer seiner Flächen mit dem Behandlungsfluid versehen wird, nämlich mit der dem Abtrennmittel gegenüberliegenden Fläche. Dies geht mit dem Vorteil einher, dass eine unbeabsichtigte Weitergabe von dem Behandlungsfluid über das Abtrennmittel auf ein nachfolgendes Formteil vermieden wird.

Die vorgegebene erreichte Anzahl ist dahingehend zu verstehen, dass auch mehrere vorgegebene Anzahlen vorgegeben sein können, nach deren Erreichen eine Wirkverringerung herbeigeführt wird, sodass also bis zum Erreichen der gewünschten Anzahl von Formteilen je nach Vorgabe beziehungsweise Vorgaben auch mehr als einmal das Erreichen der Wirkverringerung herbeigeführt ist. Es liegt dann ein Formteilstapel vor, der wenigstens eine Sollbruchstelle aufweist, oder in einem Fall in welchem mehrere vorgegebene Anzahlen vorgegeben waren: mehrere Sollbruchstellen aufweist. An der Sollbruchstelle beziehungsweise den Sollbruchstellen kann der Formteilstapel in zwei oder mehr Stapelabschnitte geteilt werden, was bevorzugt kontinuierlich während des laufenden Prozesses erfolgt. Wie viele Sollbruchstellen der Formteilstapel vor Abtrennen eines Blechpakets aufweist, hängt alleine von der Höhe der Stapelabschnitte und von der Höhe des Positionierbereichs ab.

Die Behandlungsvorrichtung ist bevorzugt hinter dem Aktivierungsmittel angeordnet, das heißt: derart angeordnet, dass ein Formteil erst das Aktivierungsmittel durchfährt und sodann die Behandlung der Klebstoffbeschichtung erfolgt.

Alternativ ist die Behandlungsvorrichtung hinter dem Schneidmittel, aber vor dem Aktivierungsmittel angeordnet.

Mit anderen Worten: Es wird in den Positionierbereich hinein ein Formteilstapel bis zu einer vorgesehenen Gesamthöhe gebildet, wobei der Formteilstapel bei Erreichen der Gesamthöhe als Blechpaket bereitsteht, das heißt: mit der gewünschten Anzahl von Formteilen, das eine Anzahl von einer Sollbruchstelle oder mehreren Sollbruchstellen aufweist. Eine solche Sollbruchstelle ist dadurch charakterisiert, dass die Haftung von zwei benachbarten Formteilen geringer ist als die Haftung von zwei benachbarten Formteilen außerhalb einer Sollbruchstelle. Die Sollbruchstellen werden in der oben beschriebenen Weise dadurch gebildet, dass nach einer vorgegebenen Anzahl von Formteilen der Klebstoff in seiner Wirkung, also seiner möglichen Haftkraft, herabgesetzt wird. Dies kann bei Bildung eines Formteilstapels in dem Positionierbereich auch mehrmals wiederholt werden. Beispielsweise kann ein eine gewünschte Anzahl N Formteile aufweisender, Formteilstapel nach jeweils N/n erreichten Formteilen eine Sollbruchstelle aufweisen, wodurch bewirkt wird, dass die Klebstoffbeschichtung bei jedem N/n-ten Formteil wirkverringert ist mit der Folge, dass der Formteilstapel (n-1) Sollbruchstellen aufweist und in n kleinere Stapelabschnitte geteilt werden kann. Dabei ist N eine durch die ganze Zahl n ganzzahlig teilbare ganze Zahl.

Es kann, wie im obigen Beispiel, vorgesehen sein, dass bis zum Erreichen der gewünschten Anzahl von Formteilen alle jeweils nachfolgenden vorgegebenen erreichten Anzahlen von Formteilen einen gleichen Abstand aufweisen, sodass die gewünschte Anzahl von Formteilen ein Blechpaket bildet, das äquidistant verteilte Sollbruchstellen aufweist, an denen jeweils dann gleich hohe Stapelabschnitte abgetrennt werden können.

Es kann alternativ vorgesehen sein, dass bis zum Erreichen der gewünschten Anzahl von Formteilen jeweils nachfolgende vorgegebene erreichte Anzahlen von Formteilen je nach Bedarf voneinander beabstandet sind, sodass die gewünschte Anzahl von Formteilen ein Blechpaket bildet, das Sollbruchstellen aufweist, mit denen Stapelabschnitte voneinander getrennt werden, die unterschiedliche Höhen aufweisen.

Aus einem Formteilstapel werden die Stapelabschnitte separat entnommen, wobei je nach noch vorhandener Klebkraft zwischen zwei Stapelabschnitten ein Trennen der Stapelabschnitte an den als Sollbruchstellen wirkenden wirkverringerten Klebstoffbeschichtungen erfolgt, beispielsweise manuell. Die einzelnen Stapelabschnitte stehen dann als fertiggestelltes Blechpaket, beispielsweise als fertiggestellter Stator, als fertiggestellter Rotor oder als fertiggestelltes Segment eines Stators beziehungsweise Rotors, bereit.

Eine spezielle Ausführungsform mit vollflächig verklebten Blechlamellen hat den Vorteil, dass dichte Kühlkanäle integriert werden können. Dies ist insbesondere vorteilhaft, wenn in mehreren elektrischen Komponenten (z. **B.** Rotor und Stator) unterschiedliche oder sogar unverträgliche Kühlmedien eingesetzt werden. Die Kühlkanäle können in die Lamelle eingestanzt oder zwischen Blechpaket und angrenzendem Bauteil, beispielsweise Welle oder Gehäuse, vorgesehen sein.

Es wird darauf hingewiesen, dass ein Stator und ggf. auch ein Rotor auch aus mehreren Segmenten zusammengesetzt sein kann.

Schritt G) sieht also vor, dass eine Sollbruchstelle oder mehrere Sollbruchstellen in dem den gesamten Positionierbereich ausfüllenden Formteilstapel bewirkt werden, wobei die Sollbruchstelle beziehungsweise die Sollbruchstellen dadurch hergestellt werden, indem ein an der Sollbruchstelle befindliches Formteil während des Durchlaufens der Schritte C) bis F) einem zusätzlichen Schritt unterzogen wird. Der zusätzliche Schritt besteht darin, dass das an der Sollbruchstelle befindliche Formteil wenigstens bereichsweise, bevorzugt vollflächig, mit einem Behandlungsfluid versehen wird für eine Wirkverringerung der Klebstoffbeschichtung dieses Formteils.

Das mit dem Behandlungsfluid beschichtete Formteil kann in einer Variante an nur einer Oberfläche mit dem Behandlungsfluid versehen werden. Diese Oberfläche liegt sodann an der Sollbruchfläche des Formteils.

Das mit dem Behandlungsfluid beschichtete Formteil kann in einer alternativen Variante an beiden Oberflächen mit dem Behandlungsfluid versehen werden. Das Formteil liegt sodann an zwei Sollbruchflächen, das Formteil dient als Opferlamelle, die nicht Bestandteil eines Stapelabschnitts ist.

Der Begriff des Blechs bezeichnet allgemein ein Walzwerkerzeugnis aus einem metallischen Material, und kann neben einem Feinblech oder einem Grobblech insbesondere auch ein Metallband, ein Metallband oder Metallblech aus einem weichmagnetischen Werkstoff, ein Stahlband oder ein Elektroband bezeichnen. Andere Herstellungsverfahren des Bleches können optional eingesetzt werden.

Das Blechpaket ist bevorzugt entweder ein Stator-Paket oder ein Rotor-Paket. Das Blechpaket besteht neben dem Klebstoff aus sogenannten Lamellen, weswegen es auch als Lamellenpaket bezeichnet werden könnte.

Erfindungsgemäß weist das Aktivierungsmittel ein erstes Infrarotleuchtmittel auf. Mit dem ersten Infrarotleuchtmittel wird die Klebstoffbeschichtung mit Infrarotstrahlung beleuchtet und durch den herbeigeführten Wärmeeintrag aktiviert.

Mit anderen Worten wird eine zur Aktivierung ausreichende Temperatur in dem Blech und insbesondere dem Klebstoff herbeigeführt, beispielsweise durch Beleuchten für einen Zeitraum von zwischen 0,05 und 1 Sekunde bei einer zum Erreichen der Aktivierungstemperatur erforderlichen Emissionsleistung, die ihrerseits selbstverständlich von der genauen Auswahl des Klebstoffs und der Beschaffenheit, insbesondere der Oberfläche und des Materials, des Formteils abhängt und für den mit der Umsetzung der Erfindung betrauten Fachmann problemlos zu ermitteln ist.

Besonders bevorzugt ist das Aktivierungsmittel beziehungsweise sind die Aktivierungsmittel zwischen Schneidmittel und Abtrennmittel angeordnet und weist beziehungsweise weisen mindestens ein oberes Infrarotleuchtmittel auf, das in eine Stanzrichtung auf die erste Blechoberfläche gerichtet ist. Alternativ weist das Aktivierungsmittel mindestens ein unteres Infrarotleuchtmittel auf, dass sich jenseits der Seite des Blechs befindet, auf welcher das Schneidmittel sich befindet und gegen eine Stanzrichtung gerichtet ist. Alternativ können sowohl mindestens ein oberes als auch mindestens ein unteres Infrarotleuchtmittel vorgesehen sein. Die Ausrichtung des Infrarotleuchtmittels beziehungsweise der Infrarotleuchtmittel auf die Lamellenoberfläche muss nicht zwingend rechtwinklig erfolgen, sondern kann auch in einem anderen Winkel, vorgenommen sein.

Insbesondere in einem Fall, in welchem sowohl ein oberes als auch ein unteres Infrarotleuchtmittel vorhanden ist, ist bei einer Nutzung von beidseitig mit einer Klebstoffbeschichtung versehenem Blech in besonders geeigneter Weise eine Aktivierung von Klebstoff sowohl auf einer ersten als auf der gegenüberliegenden zweiten Blechseite möglich mit dem vorteilhaften Ergebnis, dass eine hervorragende Haftung der Bleche miteinander zu erwarten ist.

Gemäß einer Weiterbildung weist das Aktivierungsmittel ein zweites Infrarotleuchtmittel auf. Das erste Infrarotleuchtmittel und das zweite Infrarotleuchtmittel strahlen Infrarotstrahlung unterschiedlicher Wellenlänge aus zur Aktivierung der Klebstoffbeschichtung mit unterschiedlicher Aktivierungstiefe. Beispielsweise kann vorgesehen sein, dass das erste Infrarotleuchtmittel Infrarotstrahlung mit einer Wellenlänge zwischen 780 nm und 1200 nm aufweist und/oder das zweite Infrarotleuchtmittel Infrarotstrahlung mit einer Wellenlänge zwischen 1200 nm und 3000 nm aufweist. Mit einer derartigen Anordnung kann aufgrund der wellenlängenabhängig unterschiedlichen Eindringtiefe eine gleichmäßigere und insbesondere hinsichtlich der Tiefe durchgängigere Aktivierung der Klebstoffbeschichtung herbeigeführt werden. Mit dieser gehen die Vorteile einer besonders guten Haftung und/oder einer besonders guten Kraftaufnahmefähigkeit einher.

Eine solche Anordnung kann auch als Doppelaktivierung bezeichnet werden. Diese kann wiederum ein- oder beidseitig ausgeführt werden.

Alternativ oder zusätzlich kann das Aktivierungsmittel Induktionsheizer aufweisen mit dem Vorteil, dass bei induktiver Erwärmung des Blechs der Klebstoff von der Haftfläche des Blechs mit der Klebstoffbeschichtung ausgehend aktiviert wird, sodass eine gute Aktivierung und anschließende Haftung des Klebstoffs erreicht wird.

In einer speziellen Weiterbildung wird das Band vor dem Einlaufen zu den Schneidmitteln vorgewärmt, beispielsweise mittels induktiver Erwärmung. Dies hat den Vorteil, dass die Aktivierung innerhalb der Presse mit einer geringeren Wärmemenge auskommt oder die insgesamt eingebrachte Wärmemenge erhöht wird und so die Verklebung höheren Anforderungen, beispielsweise hinsichtlich der mechanischen Eigenschaften, genügt.

Vorteil des Vorwärmens ist weiterhin eine Reduzierung der Pressenkraft mit den bekannten Vorteilen und einer geringeren Umformleistung mit einer geringeren Einbringung von Eigenspannungen. Dieser Effekt ist besonders gut erreichbar, wenn zusätzlich dem Fachmann geläufige weitere optionale Anpassungen an den Schneidwerkzeugen durchgeführt werden.

In einer weiteren Weiterbildung erfolgen einige oder mehrere, bevorzugt alle, der Schritte B) bis E) innerhalb einer Einhausung der Inline-Anlage, um die eingebrachte Wärme weitestgehend im Gesamtsystem zu halten, mit dem Vorteil einer höheren Energieeffizienz des Gesamtverfahrens.

Weiterhein können die Inline-Anlage, abschnittsweise oder vollständig, Bandeinlauf und Nachverdichterstation, aktiv erwärmt werden. Hierzu wird die üblicherweise eingesetzte Ölheizung von Pressenständer und Werkzeugaufnahme um eine Erwärmung des Werkzeuges, der Nachverdichterstation und/oder des Innenraums, beispielsweise mittels Gebläse mit elektrischer Heizpatrone, bevorzugt im Gegenstrom, erweitert.

In einer speziellen Ausführungsform kann vorgesehen sein, dass die Aktivierungstemperatur in der Inline-Anlage zwischen 30 Grad Celsius und 180 Grad Celsius, bevorzugt zwischen 40 Grad Celsius und 120 Grad Celsius, besonders bevorzugt zwischen 50 Grad Celsius und 100 Grad Celsius beträgt, und dass in der Nachverdichterstation eine Nachverdichtung bei einer Temperatur durchgeführt wird, die größer ist als die Aktivierungstemperatur. Es sind in Weiterbildungen Varianten vorgesehen, gemäß denen die Behandlungsvorrichtung eine Beschichtungseinheit aufweist, mit der als Behandlung der Klebstoffbeschichtung das Formteil wenigstens bereichsweise mit einem Behandlungsfluid beschichtet wird, das auf die Klebstoffbeschichtung aufgetragen wird. Das Behandlungsfluid dient dazu, die Wirkung des Klebstoffs bei einem jeweils hierfür ausgewählten Formteil, nach einer vorgegebenen erreichten Anzahl von Formteilen, herabzusetzen, sodass der sich ergebende Formteilstapel an dieser Stelle eine Art Sollbruchstelle aufweist, die zwei aufeinander angeordnete Stapelabschnitte voneinander trennt. Die Beschichtungseinheit kann beispielsweise eine Auftragsrolle oder eine Rolleneinheit aus zwei gegenläufigen Auftragsrollen sein, die parallel oder senkrecht zur Transportrichtung der Formteile in der Inline-Anlage über ein hierfür ausgewähltes Formteil zu dessen Beschichtung fährt.

Es kann vorgesehen sein, dass das ausgewählte Formteil einseitig oder beidseitig mit dem Behandlungsfluid versehen wird. Wenn das Formteil beidseitig mit dem Behandlungsfluid beschichtet wird, ist das Formteil zu beiden Seiten von jeweils einem Stapelabschnitt trennbar und ist sodann ohne weitere Funktion als Ausschuss entfernbar.

Bevorzugt wird das Formteil vollflächig auf mit dem Behandlungsfluid beschichtet.

Bevorzugt wird als Behandlungsfluid ein Stanzöl auf der Klebstoffbeschichtung aufgetragen mit dem Vorteil der günstigen Beschaffbarkeit sowie der zusätzlichen Eignung dadurch, dass Stanzöl ohnehin in dem Prozess unvermeidlich eingesetzt wird, sodass keine unerwünschten Reaktionen aufgrund der Verwendung einer andersartigen weiteren Substanz zu erwarten sind.

Bevorzugt ist das Stanzöl ein selbstverflüchtigendes Stanzöl.

Als Stanzöl kommt beispielsweise ein nichtwassermischbarer Kühlschmierstoff in Frage, insbesondere ein mittelviskoses Metallbearbeitungsöl für die spanlose Umformung.

Bevorzugt wird ein Öl frei von Chlor und Schwermetallen, wie z. B**.** Barium, eingesetzt, das für Tiefzieh-Operationen geeignet ist und durch sein Haft- und Netzvermögen einen homogenen Schmierfilm gewährleistet. Weiter bevorzugt weist das Öl eine Viskosität von 80 bis 110 mm²/s, bevorzugt 90 bis 100 mm²/s bei 40 °C auf sowie einen Flammpunkt von > 150 °C, bevorzugt > 170 °C. Insbesondere enthält das Öl Phenol und isopropyliertes Phosphat, bevorzugt in einem Verhältnis von 3:1**,** und optional Triphenylphosphat in einem Anteil von 5 Gewichtsprozent.

Beispielsweise kann ein Öl verwendet werden, wie es die Firma Castrol zum Anmeldezeitpunkt dieser Anmeldung unter dem Markennamen Iloform FST 16 verkauft.

Alternativ oder zusätzlich kann ein Leuchtmittel genutzt werden, mit dem als Behandlung der Klebstoffbeschichtung die Klebstoffbeschichtung überbelichtet wird. Beispielsweise kann ein für die Aktivierung verwendetes Infrarotleuchtmittel zur Überbelichtung genutzt werden, indem bei einem hierfür ausgewählten Formteil kurzzeitig, beispielsweise durch eine Anlagensteuerung, die Leuchtleistung des Infrarotleuchtmittels hochgesetzt wird und/oder die Verweildauer des Formteils unter dem Infrarotleuchtmittel durch temporäre Verlangsamung oder temporären Stillstand des Transports der Formteile zu erhöhen.

Alternativ oder zusätzlich kann mittels einer Befeuchtungseinheit als Behandlung der Klebstoffbeschichtung eine Kühlflüssigkeit auf die Klebstoffbeschichtung aufgebracht werden, beispielsweise flüssiger Stickstoff.

In Schritt F) werden die Formteile erfindungsgemäß abgelegt, bevorzugt werden sie außerdem, entweder nach jedem abgelegten Formteil, oder nach einer bestimmten vorgegebenen Anzahl von mehreren abgelegten Formteilen, oder nach Bildung des Formteilstapels mit einer axialen Kraft, das heißt: einer senkrecht zur flachen Oberfläche weisenden Kraft, angedrückt, beispielsweise mittels eines Anpressstempels. Die axiale Kraft unterstützt die durch das Eigengewicht der Formteile sich ergebenden Kräfte, ist aber deutlich geringer als die während eines eventuellen Nachverdichtens angewandten Kräfte.

Erfindungsgemäß wird nach Abtrennen eines Stapelabschnitts der Stapelabschnitt in einer Presse nachverdichtet mit einem stirnseitigen, das heißt: senkrecht zur Lamellenfläche, vorzugsweise über die Stirnseite konstanten, Druck zwischen 10000 N/(14000 mm²) und 200000 N/(10000 mm²), vorzugsweise zwischen 50000 N/(14000 mm²) und 150000 N/(10000 mm²), bevorzugt bei einer Temperatur des Formteilstapels zwischen 30 Grad Celsius und 180 Grad Celsius, bevorzugt zwischen 40 Grad Celsius und 120 Grad Celsius, besonders bevorzugt zwischen 50 Grad Celsius und 100 Grad Celsius. Die Verdichtung findet dadurch in einem zweistufigen Verfahren statt, wobei die erste Stufe das Bilden des Formteilstapels des Schritts F) oder das Bilden eines Stapelabschnitts des Formteilstapels des Schritts F) ist und die zweite Stufe das Nachverdichten. Es hat sich gezeigt, dass ein zweistufiges Verdichten eine signifikante Erhöhung der Haftung herbeiführt, nämlich etwa eine Verdopplung der bei Kopfzugprüfung aufzubringenden Kraft für ein Trennen eines Stapelabschnitts. Beispielhafte Messungen werden weiter unten beschrieben. Weitere nachgewiesenen Vorteile sind eine verbesserte Wärmeabfuhr und eine um mehr als 5 Prozent erhöhte Scherfestigkeit des gesamten Verbunds.

Die genaue Abstimmung der Temperaturen und Drücke ist durch den Fachmann - unter Berücksichtigung der Taktzeit und ökonomischen Aspekte - vorzunehmen und kann auch abhängig sein vom Verhältnis Klebstoffdicke zu Blechdicke und die gewählte Konfiguration von den Aktivierungsmitteln aber auch insbesondere von den Anforderungen an das zu erstellende Bauteil.

Die Temperatur des Formteilstapels zwischen 30 Grad Celsius und 180 Grad Celsius, bevorzugt zwischen 40 Grad Celsius und 120 Grad Celsius, besonders bevorzugt zwischen 50 Grad Celsius und 100 Grad Celsius beträgt wird bevorzugt dadurch erhalten, dass in der Positioniervorrichtung mittels eines Wärmeeintrag erzeugenden Leuchtmittels, gegebenenfalls angeordnet in oder neben dem Abtrennmittel und/oder mittels einer an der Positioniervorrichtung angeordneten Induktionsvorrichtung ein Erwärmen des Formteilstapels erfolgt und die aus dieser Erwärmung resultierende Restwärme im oben genannten Bereich beim Nachverdichten genutzt wird.

Der Verdichtungsschritt wird ausgeführt, indem in eine axiale Richtung des Blechpakets mit einem gleichmäßigen Flächendruck stirnseitig, das heißt in eine senkrecht zur Oberfläche der Lamelle weisenden Richtung, in eine axiale Richtung eine Komprimierung des Blechpakets durchgeführt wird. Durch die Komprimierung wird erreicht, dass der Haftverbund zwischen den einzelnen Formteilen besonders gut hergestellt wird und trägt damit zu der Langlebigkeit des Blechpakets bei. Der nachgelagerte Verdichtungsschritt findet bevorzugt außerhalb der Presse in einer nachgelagerten Verdichtungsstation statt.

In einer Weiterbildung kann das Verdichten mit Wegregelung anstatt einer Kraftregelung erfolgen. Dies wird beispielsweise durch einen adjustierbaren Anschlag realisiert. In Kombination mit einer sehr genauen Temperaturführung kann die axiale Länge der Bauteile dadurch sehr genau eingestellt werden.

Alternativ kann der Verdichtungsschritt aber auch durch, bevorzugt teil oder vollflächigen, Druck des Abtrennmittels erfolgen.

Besonders vorteilhaft ist die durch Verkleben und Nachverdichten erreichte sehr gute mechanische Festigkeit des Blechpakets, wodurch beispielsweise eine spanende Bearbeitung deutlich einfacher und genauer realisiert werden kann. Die mit der Drehzahl beziehungsweise Umfangsgeschwindigkeit steigenden Anforderungen können daher einfacher realisiert werden. Weiterer Vorteil ist ein hohes Maß an konstruktiven Freiheiten.

Aufgrund der gleichmäßigen Erwärmung des Einzelbleches (bzw. Sandwich) ist eine homogenere Erwärmung mit den einhergehenden Vorteilen z.B**.** bzgl. besserer geometrischer Eigenschaften, geringerer innerer Spannungen, gegeben.

Besonders bevorzugt wird das Verfahren mit einem Blech durchgeführt, bei welchem die Klebstoffbeschichtung als wässrige Dispersion auf dem Blech aufgetragen wurde. Der Vorteil einer wässrigen Dispersion besteht darin, dass das Beschichtungssystem frei von organischen Lösungsmitteln ist (VOC-frei).

Des Weiteren besteht der Vorteil, dass das beschichtete Blech nahezu klebfrei auftrocknet, sodass ein Aufwickeln zum Coil ohne das Verkleben der einzelnen Windungen untereinander möglich ist. Eine anschließende chemische Vernetzung unter Druck und Temperatur ist weiterhin gegeben. Lösungsmittelhaltige gelöste Epoxidharz-Systeme sind für eine Klebfreitrocknung in der Regel nicht ausreichend hochmolekular mit dem Nachteil, dass die einzelnen Windungen im Coil sich, wenn überhaupt, nur noch schwer Abwickeln lassen, wodurch die Nutzung in einem Folgeprozess verhindert ist.

Eine Ausführungsform sieht daher in besonders bevorzugter Weise vor, dass die aufgetragene Klebstoffbeschichtung nicht in einem organischen Lösungsmittel gelöst vorlag.

Die Klebstoffbeschichtung besteht bevorzugt aus einem Klebstoff, der im Vergleich mit marktüblichen, dem Fachmann bekannten, Backlacksystemen eine signifikant höhere Viskosität, insbesondere signifikant höhere komplexe Viskosität unmittelbar vor dem Einsetzen der chemischen Vernetzung, bei vergleichbaren Einbrennbedingungen besitzt, was durch weiter unten dargestellte Versuchsergebnisse illustriert ist. Dadurch ergibt sich der Vorteil, dass bei den Temperaturen, wie sie im Verlaufe des erfindungsgemäßen Verfahrens oder seiner Weiterbildungen erreicht werden, keine Verflüssigung des Klebstoffs erfolgt, sondern allenfalls der Klebstoff plastisch wird, also erweicht, sodass der Klebstoff vollständig innerhalb des Formteilstapels bleibt.

Insbesondere wird bevorzugt ein Klebstoff verwendet, der kein Schmelzklebstoff ist, das heißt bevorzugt: ein Klebstoff, der bei den wie oben beschriebenen Aktivierungstemperaturen bis zu 180 Grad Celsius nicht flüssig wird.

Besonders bevorzugt wird ein Klebstoff verwendet, der unmittelbar vor Einsetzen der chemischen Vernetzung, das heißt beispielsweise: in einer Kurve "komplexe Viskosität (Temperatur)" am Ort des lokalen Minimums, das dem Temperaturbereich der chemischen Vernetzung am nächsten kommt, eine komplexe Viskosität von 8 Pa x s oder höher, bevorzugt 10 Pa x s oder höher, aufweist. Ein Klebstoff, der die genannte komplexe Viskosität nicht unterschreitet, zumindest bei einer Temperatur unterhalb einer Temperatur, bei der die chemische Vernetzung einsetzt, führt bei einem erfindungsgemäßen Verfahren oder seinen Weiterbildungen dazu, dass keine großflächige Verflüssigung des Klebstoffs stattfindet, sondern der Klebstoff bei den eingesetzten Temperaturen, insbesondere auch bei den eingesetzten Aktivierungstemperaturen, allenfalls pastös wird. Dies wiederum führt dazu, dass ein Blechpaket mit hervorragenden Eigenschaften, insbesondere einer hohen Maßhaltigkeit in der Geometrie, erhalten wird. Auch eignet sich ein solchen Blechpaket in besonderer Weise für eine Ausführung eines Verfahrens mit einem Nachverdichtungsschritt, wodurch die hohe Maßhaltigkeit in der Geometrie zusätzlich begünstigt wird.

Der Klebstoff enthält bevorzugt:
60 Gewichtsteile eines Epoxidharzes in Festharzform,
0,5 bis 15 Gewichtsteile eines latenten Härters,
1 bis 15 Gewichtsteile eines latenten Beschleunigers.

Bevorzugt weist der Klebstoff 1 bis 10 Gewichtsteile des latenten Härters, besonders bevorzugt 2 bis 5 Gewichtsteile des latenten Härters auf.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut latent bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor.

Dadurch, dass ein Blech mit einer Klebstoffbeschichtung aus einem thermisch aktivierbaren Klebstoff bereitgestellt wird, dient das mit dem Klebstoff beschichtete Blech als Vorprodukt für auf flexible Weise anpassbare Herstellverfahren von elektromagnetischen Komponenten, insbesondere Statorpaketen oder Rotorpaketen. Dadurch, dass der Klebstoff zunächst thermisch aktiviert werden muss, kann die Klebefunktion nach dem Ausnehmen von Lamellen aus dem Blech, beispielsweise durch Stanzen, zu einem gewünschten Zeitpunkt beziehungsweise zu einem gewünschten Verfahrensschritt vorgenommen werden. Innerhalb eines kurzen Zeitraums nach dem Aktivieren müssen die Lamellen nach dem Aktivieren (optional bevorzugt auch unter teil- oder vollflächigem Druck in der Presse und/oder in einem nachgeschalteten Verdichtungsprozess) zusammengeführt werden, damit diese während der chemischen Aushärtereaktion miteinander verklebt werden. Nur so können fehlerfreie, nicht delaminierte und geometrisch genaue, mechanisch stabile Pakete erzeugt werden.

Mit der beschriebenen Klebstoffzusammensetzung weist das Blech eine Oberfläche mit einer potentiell kurzen Aktivierungszeit von beispielsweise 0,05 bis 1 Sekunde, bevorzugt 0,3 bis 1 Sekunde, auf. Diese Eigenschaften gehen mit einer vergleichsweise hohen Temperaturbeständigkeit und einer vergleichsweise hohen Isolationsfähigkeit- und Alterungsbeständigkeit einher.

Das in dem beschriebenen Klebstoff vorhandene Epoxidharz umfasst eine oder mehrere Epoxidharzkomponenten mit mehr als einer Epoxidgruppe, von denen vorzugsweise mindestens ein Epoxidharz ein Erweichungspunkt größer 50 Grad Celsius besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-o-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

In einer bevorzugten Ausgestaltung ist das Epoxidharz Bisphenol A-Epoxidharz.

Als latenter Härter wird eine Substanz oder ein Gemisch von Substanzen verwendet, die vorzugsweise bei Temperaturen im Bereich von 80 Grad Celsius bis 200 Grad Celsius Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2''methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure-Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

In einer bevorzugten Ausgestaltung enthält der Beschleuniger ein Harnstoffderivat und/oder ein Imidazol.

Die Klebstoffzusammensetzung kann darüber hinaus noch weitere Komponenten enthalten, beispielsweise ein Korrosionsschutzadditiv.

Bevorzugt ist, wenn der Härter ein Dicyandiamid, ein Imidazol, einen BF3-Aminkomplex oder eine Kombination derselben enthält.

Der Klebstoff kann in einer Ausgestaltung 1 bis 10 Gewichtsteile eines latenten Beschleunigers, bevorzugt 1 bis 5 Gewichtsteile eines latenten Beschleunigers, besonders bevorzugt 1 bis 4 Gewichtsteile eines latenten Beschleunigers enthalten.

In einer anderen bevorzugten Ausführungsform ist vorgesehen, dass der Klebstoff weiterhin 0,2 bis 8 Gewichtsteile, bevorzugt 0,2 bis 5 Gewichtsteile, eines Farbstoffs aufweist. Hierdurch kann das optische Erscheinungsbild der Oberfläche gefälliger gestaltet werden. Der Farbstoff kann aus der Gruppe der Flammruße, der Eisenoxidschwarzpigmente, oder der wasserlöslichen Farbstoffe ausgewählt sein oder eine Mischung von mehreren der vorgenannten.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gewichtsteilen, bevorzugt 1 bis 5 Gewichtsteilen, in dem Kleber enthalten sein.

Bevorzugt enthält der Klebstoff eines oder mehrere der dem Fachmann bekannten Korrosionsschutzadditive. Die Korrosionsschutzadditive können in Mengen von 1 bis 10 Gewichtsteilen, bevorzugt 1 bis 5 Gewichtsteilen, in dem Kleber enthalten sein.

In einer Variante des Verfahrens enthält der latente Beschleuniger ein Harnstoffderivat.

Der im Klebstoff enthaltene latente Beschleuniger besteht vorzugsweise zu wenigstens 50 **Gew.-%,** noch bevorzugter wenigstens 90 **Gew.-%,** noch bevorzugter vollständig, aus Harnstoffderivat.

Als Harnstoffderivat wird bevorzugt ein N,N-Dimethylharnstoff oder ein N,N'-Dimethylharnstoff oder ein bifunktionelles Harnstoffderivat verwendet, besonders bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

In einer Variante des Verfahrens wird als Harnstoffderivat auch oder ausschließlich ein unsymmetrisch substituierter Harnstoff verwendet.

In einer alternativen Weiterbildung des Verfahrens wird ein Harnstoffderivat eingesetzt, bei welchem mindestens eines, bevorzugt 2, besonders bevorzugt 3 Wasserstoffatome durch, voneinander unabhängig, Alkylgruppen und oder Phenyl Gruppen, die ihrerseits substituierter sein können, ersetzt sind. Bevorzugt handelt es sich bei den Alkylgruppen um Methyl, Ethyl, Propyl oder Butyl, bevorzugt Methyl; bei der Phenyl Gruppe handelt es sich um Phenyl oder um eine tief substituiertes finden, bevorzugt in Position 4, ebenfalls bevorzugt als ein kühl 1 der oben genannten Alkyle. In einer weiteren Alternative wird im Sinne der Erfindung ein difunktionelles Harnstoffderivat als ein oben beschriebenes Derivat bezeichnet, welches 2 funktionelle Gruppen aufweist. Funktionelle Gruppen sind Atomgruppen, welche die Stoffeigenschaften und insbesondere das Reaktionsverhalten der Verbindung maßgeblich bestimmen, insbesondere gehen die funktionellen Gruppen Reaktionen ein. Ferner ist das einzusetzende Harnstoffderivat halogenfrei. In einer Alternative weist das einzusetzende Harnstoffderivat 2 Harnstoffderivate als funktionelle Gruppen auf. Vorteilhaft können dadurch Epoxyharze ohne die Anwesenheit von Dicyanamiden als Vernetzer gehärtet werden.

Als Harnstoffderivat kann auch ein Stoff 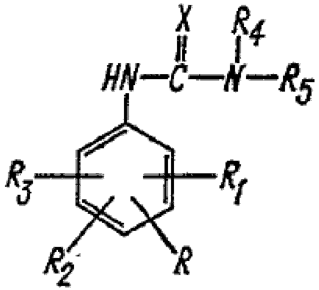 vorgesehen sein mit R: Wasserstoff oder eine Gruppe gemäß 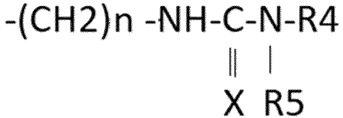 mit
n = 0 oder 1, bevorzugt 1,
X = O oder S, bevorzugt O,
R1, R2 und R3: jeweils Wasserstoff, ein Halogen, NitroGruppe, eine substituierte oder nichtsubstituierte Alkylgruppe, Alkoxylgruppe, Arylgruppe oder Aryloxylgruppe,
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,R5: wie R4 oder Alkoxylgruppe, R5 optional mit R4 einen heterocyklischen Ring bildend,
oder ein N,N-Dimethyl-N'-(3,4-Dichlorophenyl)Harnstoff oder ein N,N-Dimethyl-N'-(3-chioro-4-methyl-phenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N,N-dimethyl-N' (3-chloro-4-methylphenyl)thio-Harnstoff;
bevorzugt ist das Harnstoffderivat 4,4'-Methylen-bis-(Phenyldimethylharnstoff);
oder eine Mischung aus zwei, drei oder mehreren der vorgenannten. Eine solche Mischung enthält bevorzugt mindestens 10%, 25%, bevorzugt 50%, 60%, 70%, 80% oder 90% 4,4'-Methylen-bis-(Phenyldimethylharnstoff).

Der Vorteil von Harnstoffderivaten der genannten Art ergibt sich aus der GB 1293142 A. Die Erfinder haben gefunden, dass derartige Derivate sich hervorragend für die Herstellung von elektromagnetischen Komponenten nutzen lassen.

Die mittlere Teilchengröße (arithmetisches Mittel) des Harnstoffderivats ist bevorzugt zwischen 1 Mikrometer und 30 Mikrometer.

Es kann vorgesehen sein, dass die Klebstoffbeschichtung auf dem Blech einseitig oder beidseitig aufgebracht ist. Wenn beidseitig eine Klebstoffbeschichtung aufgebracht ist, kann die Dicke der Beschichtung gleich sein, aber auch unterschiedliche Dicken können vorgesehen sein.

Als bevorzugte Dicke der Klebstoffbeschichtung, das bedeutet bei einseitigem Klebstoff die Dicke der Beschichtung auf der einen Seite beziehungsweise bei zweiseitiger Klebstoffbeschichtung die Gesamtdicke der Klebstoffbeschichtung auf beiden Seiten addiert, beträgt zwischen 1 Mikrometern und 20 Mikrometern, bevorzugt zwischen 2 Mikrometern und 10 Mikrometern. Besonders bevorzugt ist eine Gesamtdicke zwischen 4 und 8 Mikrometern.

Eine einseitig vorgenommene Klebstoffbeschichtung des Blechs geht mit einer apparativ einfacheren Herstellung einher, eine beidseitige Klebstoffbeschichtung des Blechs geht wiederum mit dem Vorteil einher, dass bei einer Aufeinanderpositionierung von einzelnen aus dem Blech hergestellten Lamellen Klebstoffoberfläche an Klebstoffoberfläche positioniert wird, wodurch eine verbesserte Haftung und dadurch eine höhere mechanische Stabilität der elektromagnetischen Komponente erreicht wird, was in Versuchen gezeigt wurde.

Besonders bevorzugt ist die erste Teilbeschichtung der ersten Blechoberfläche und die zweite Teilbeschichtung der zweiten Bleichoberfläche mit einer zweiten Dicke derart aneinander angepasst, dass die erste Dicke wenigstens das 1,5-fache, bevorzugt das 2-fache der zweiten Dicke beträgt. In einer derartigen Konfiguration ist die erste Dicke für eine hervorragende Isolation verantwortlich, so dass die Gefahr von Klebstofflücken nahezu verschwindend ist, während die dünnere der beiden, nämlich die mit der zweiten Dicke, aufgetragene zweite Teilbeschichtung im Wesentlichen der Herstellung der hervorragenden Haftung dient.

Ganz besonders bevorzugt ist eine beidseitige Beschichtung mit einer Gesamtdicke beider Beschichtungen zwischen 4 und 6 Mikrometern. Eine derart geringe Beschichtungsdicke ist mit den erfindungsgemäß oder gemäß Weiterbildungen der Erfindung durchgeführten Verfahren aufgrund ihrer hohen Reaktivität möglich, wie die hergestellten Beispiele belegen. Bekannte Backlack-Klebstoffe erfordern in der Regel höhere Beschichtungsdicken als 6 Mikrometer (z.B. Backlack beidseitig, je 5µm pro Seite). Dies führt zu dem Vorteil, dass aus den erfindungsgemäß durchgeführten Versuchen mit den Blechen in einer der beschriebenen Arten insbesondere Statoren oder Rotoren hergestellt werden können, die einen signifikant höheren Eisenfüllfaktor aufweisen als es mittels Backlack-Verfahren hergestellte Komponenten tun. Vorteil ist eine etwas höhere Effizienz der die Komponente aufweisende elektrische Maschine. Aber Klebstoffbeschichtungen zwischen insgesamt 1 und 20 Mikrometern, bevorzugt 2 und 8 Mikrometern, können vorgesehen sein.

In einer weiteren Alternative ist zwischen Blech und Klebstoffschicht eine Vorbehandlung, ein Haftvermittler, eine Phosphatierung und/oder ein Isolator, beispielsweise als Isolierlackschicht ausgebildet, angeordnet und/oder auf der Klebstoffschicht gegenüberliegenden Seite des Blechs nur Isolierlack angeordnet oder es sich um eine unbeschichtete Oberfläche handelt.

Besonders bevorzugt ist das Blech als nicht kornorientiertes Elektroband, auch als sogenanntes NO-Elektroband bezeichnet, ausgebildet oder aus einem solchem abgetrennt, wobei das nicht kornorientierte Elektroband neben Fe und unvermeidbaren Verunreinigungen folgende Elemente enthält (alle Angaben in in Gew.-%):
0,1 bis 3,50 Si,
0,01 bis 1,60 Al,
0,07 bis 0,65 Mn,
optional bis zu 0,25 P.
Es versteht sich, dass die Gesamtheit aller Legierungsbestandteile und der Verunreinigungen sich zu 100 Gew.-% ergänzen.

Besonders bevorzugt werden die nachfolgenden Bedingungen eingehalten (alle Angaben in Gew.-%):
2,3 bis 3,40 Si,
0,3 bis 1,1 Al,
0,07 bis 0,250 Mn,
optional bis zu 0,030 P, Rest Fe und unvermeidbare Verunreinigungen.

Es versteht sich, dass die Gesamtheit aller Legierungsbestandteile und der Verunreinigungen sich zu 100 Gew.-% ergänzen.

Vorzugsweise weist das nicht kornorientierte Elektroband oder das nicht kornorientierte Blech eine Streckgrenze in Längsrichtung bei Standardnormalbedingungen von 190 bis 610 MPa und eine maximale Zugfestigkeit von 310 bis 740 MPa und eine Mindestbruchdehnung A80 von 6 bis 48 % gemessen in Anlehnung an DIN EN ISO 6892-1 sowie eine Härte Hv5 von 100-250 auf.

In einer besonders bevorzugten Ausführungsform weist der Werkstoff eine Streckgrenze in Längsrichtung bei Raumtemperatur von 310 bis 600 MPa und eine maximale Zugfestigkeit von 400 bis 640 MPa sowie eine Bruchdehnung A80 von 7 bis 32 % gemessen in Anlehnung an DIN EN ISO 6892-1 sowie eine Härte Hv5 von 130-250 auf.

Das Material weist bevorzugt eine Anisotropie bei P1,0; 400 Hz im Bereich von 5 bis 17 % auf.

Geeignet und bevorzugt verwendet werden Bleche genutzt, insbesondere Elektroband, mit einer Dicke zwischen 0,05 und 2,5 mm, wobei Dicken zwischen 0,1 und 1,0 mm bevorzugt werden. Besonders bevorzugt werden Dicken zwischen 0,15 und 0,4 mm eingesetzt.

Alternativ kann das Blech ein Mehrlagenverbund (Sandwich) aus einer Blechlage, beispielsweise aus einem der oben beschriebenen Elektrobänder, sein und einer oder mehreren weiteren Lagen bestehen, beispielsweise mit einer akustisch dämpfenden Funktionslage (z.B. bondal E). Des Weiteren kann das Blech auch ein- oder beidseitig mit einer akustisch dämpfenden Funktionslage (z.B. Halb-bondal E) beschichtet sein, so dass das beschriebene Klebstoffsystem direkt an die akustisch dämpfende Funktionslage (z.B**.** chemische Basis Acrylat) anbindet. Aus der Technik ist bekannt, dass Epoxidharzsysteme gute Verträglichkeit aufweisen.

Alternativ kann das Blech auf einer Seite eine akustisch dämpfenden Funktionslage aufweisen und auf der gegenüberliegenden Blechseite eine einzusetzende Klebstoffschicht.

In einer vorteilhaften Weiterbildung werden die Schritte C) bis F) des erfindungsgemäßen Verfahrens mit einer Hubzahl von wenigstens 80/min, bevorzugt zwischen 120/min und 300/min, durchgeführt. Bei geringeren Anforderungen an die Klebstoffverbindung oder kleineren elektrischen Komponenten kann eine Hubzahl auch deutlich über 300/min realisiert werden.

Ein Gedanke betrifft ein Blechpaket oder einen Stapelabschnitt eines Blechpakets für eine elektrische Maschine, das mit einem Verfahren der eingangsbeschriebenen Art oder einer seiner Weiterbildungen hergestellt ist. Insbesondere ist das Blechpaket oder der Stapelabschnitt ausgebildet als Stator oder als Rotor.

Weiterhin ist ein Gedanke einer elektrischen Maschine umfasst, insbesondere eines Elektromotors, der einen Stator und/oder einen Rotor aufweist, der mit einem erfindungsgemäßen Verfahren oder einer seiner Weiterbildungen hergestellt wurde.

Gemäß einem Gedanken weist die elektrische Maschine einen Stator und einen Rotor auf, wobei der Stator teilweise oder vollständig ein Blechpaket ist, das mit dem erfindungsgemäßen Verfahren oder einer seiner Weiterbildungen hergestellt ist, und der Rotor teilweise oder vollständig ein mittels fachmännischen Stanzpaketierens hergestelltes Bauelement ist. Der hinsichtlich der elektromagnetischen Effizienz besonders anspruchsvolle Stator wird dadurch mit hervorragenden elektromagnetischen Eigenschaften bereitgestellt, während der hinsichtlich seiner elektromagnetischen Eigenschaften in vielen Anwendungen weniger anspruchsvolle Rotor mit dem herkömmlichen Stanzpaketieren hergestellt wird, das sehr kosteneffizient ist. Es wird folglich eine elektrische Maschine bereitgestellt, die einen guten Trade-Off aus guten elektromagnetischen Eigenschaften und kosteneffizienter Herstellung bietet.

Weitere Einzelheiten, Merkmale und Vorteile des Gegenstands der Erfindung ergeben sich aus der nachfolgenden Beschreibung im Zusammenhang mit den Zeichnungen, in denen beispielhaft Ausführungsbeispiele der Erfindung dargestellt sind.

### Beispiele

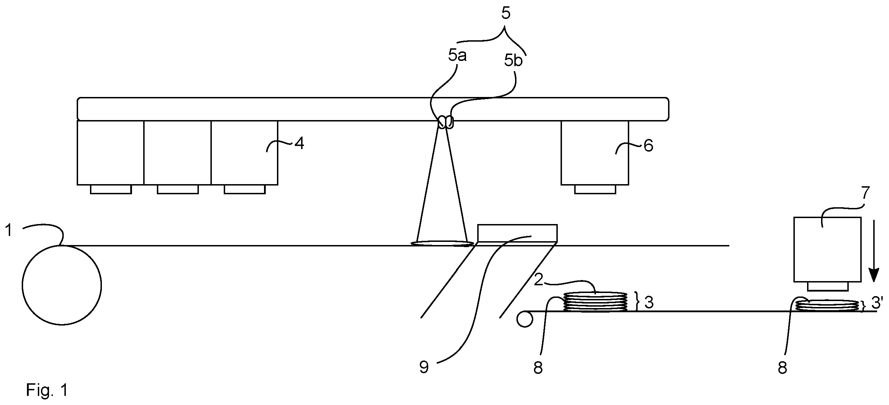

Ein Beispiel für eine erste Ausführung des Verfahrens zum Herstellen eines Blechpakets für einen Elektromotor ist in Fig. 1 dargestellt. Es wird ein bereits mit einem Klebstoff beschichtetes Blech bereitgestellt, und zwar als nicht kornorientiertes Elektroband 1, beschichtet mit einem Klebstoff einer der erfindungsgemäß vorgesehenen Art. Dieses Band wird in eine Inline-Anlage hineintransportiert. In einer ersten Station sorgt eine Anzahl von als Stanzstempel ausgebildeten Schneidmitteln 4 für ein Schneiden von Formteilen 2, die als Rotorlamelle oder als Statorlamelle ausgebildet sind. In einer nachfolgenden Station wird das Formteil mittels eines als NIR-Emitter ausgebildeten Mittels zur Ausgabe von Infrarotstrahlung 5 beleuchtet, durch die dadurch herbeigeführte Erwärmung wird die Klebstoffbeschichtung des Formteils aktiviert. Das Aktivierungsmittel 5 weist ein erstes Infrarotleuchtmittel 5a und ein zweites Infrarotleuchtmittel 5b auf. Das Leuchtmittel 5a emittiert Strahlung der Wellenlängen 780 nm und 1200 nm während das zweite Leuchtmittel Strahlung der Wellenlängen 1200 nm und 3000 nm emittiert. Durch das Bestrahlen mit verschiedenen Wellenlängen wird in senkrecht zur Blechoberfläche weisender Richtung eine gleichmäßigere Aktivierung der Klebstoffbeschichtung erreicht, wobei außerdem aufgrund der höheren Effizienz eine erhöhte Hubzahl erlaubt wird, da für das Aktivieren der Klebstoffbeschichtung eine geringere Zeitdauer benötigt wird.

Mit der als Beschichtungswalze ausgebildeten Behandlungsvorrichtung 9 werden bestimmte Lamellen beschichtet, um im späteren Formteilstapel als Sollbruchstelle zwischen einzelnen Blechpaketen zu fungieren. Die Beschichtungswalze 9 fährt immer dann, wenn jeweils eine vorgegebene erreichte Anzahl von Formteilen das Aktivieren der Klebstoffbeschichtung absolviert hat, an das Blech an, in der gezeigten Darstellung in die Papierebene hinein, und beschichtet das der vorgegebenen erreichten Anzahl nächstfolgende Formteil, um die Wirkung der Klebstoffbeschichtung herabzusetzen oder vollständig zu beseitigen. Das beschichtete Formteil weist sodann eine Sollbruchstelle auf, an welcher der Formteilstapel, bevorzugt im kontinuierlich laufenden Prozess, in Stapelabschnitte getrennt werden kann und jeder der Stapelabschnitte das fertiggestellte Blechpaket darstellt. Bei der Herstellung des Formteilstapels war die Lamelle 8 eine Lamelle, die einer vorgegebenen erreichten Anzahl von Formteilen entsprach. Aus diesem Grund wurde sie mit der als Behandlungsvorrichtung eingerichteten Beschichtungswalze 9 mit einem Stanzöl beschichtet und verfügt dadurch über eine verringerte Klebkraft.

Das Formteil wird anschließend mit dem als Ausschneidstempel ausgebildeten Abtrennmittel 6 ausgepresst und in einem Positionierbereich zu einem Stapel 3 positions- und/oder winkelausgerichtet gesammelt und vorfixiert, das heißt: die mit aktivierter Klebstoffbeschichtung versehenen Lamellen haften bereits aufgrund ihres Eigengewichts aneinander.

Im Zustand der Entnahme ist das Blechpaket der an der Sollbruchstelle 8 entnommene Stapelabschnitt des Formteilstapels, der an der Lamelle 8 eine wirkverringerte Klebstoffbeschichtung aufweist. Die Stapelabschnitte können entweder durch Eigengewicht entnommen werden oder durch apparative oder manuelle Unterstützung von dem Formteilstapel getrennt werden. Im vorliegenden Beispiel liegen zwei separate Stapelabschnitte vor, die in einem nachfolgenden Schritt als Stapelabschnitt 3' in der Verdichterstation 7 nachverdichtet werden.

Abschließend erfolgt in einer Verdichtungsstation ein Verdichten mit einem Verdichterstempel 7, bis der Klebstoff ausgehärtet ist und das fertige Blechpaket entnommen werden kann.

Beispiele für ein vorteilhaft verwendbares Blech und dessen vorteilhaftem Verhalten für die erfindungsgemäßen Verfahren ergeben sich aus durchgeführten Versuchen.

Es wurden folgende Proben hergestellt:
Platinen aus einem Elektroband M800-50A (nach EN 10027-1) mit der Werkstoffkennzahl 1.0816 (nach EN 10027-2), Dicke 0,5 mm, Länge x Breite: 200 x 150 mm.

Es wurden Proben 0, 1, 2 und 3 hergestellt. Probe 0, 1 und 2 sind eine Vergleichsproben, sie sind mit einem nicht vorteilhaften Klebstoff beschichtet.

Probe 3 ist eine vorteilhafte Probe.

Die hergestellten Proben sind Platinen der oben genannten Art, die mit einer Auftragswalze mit Klebstoff beschichtet wurden gemäß den folgenden Parametern:

| Probenbezeichnung | Gewichtsteile Epoxidharz (als Festharz vorliegend) | Gewichtsteile Härter | Gewichtsteile Beschleuniger | Ausgewählter Beschleuniger |
|---|---|---|---|---|
| Probe0 | 60 | 3,5 | 4, 5 | Herkömmlicher Beschleuniger (DYHARD URAcc57, Markenname) |
| Probe1 | 60 | 3,5 | 3, 0 | Herkömmlicher Beschleuniger (DYHARD URAcc13, Markenname) |
| Probe2 | 60 | 3,5 | 3, 0 | Herkömmlicher Beschleuniger (DYHARD URAcc13, Markenname) |
| Probe3 | 60 | 3,5 | 3, 0 | 4,4'-Methylenbis-(Phenyldimethyl harnstoff) |

Schichtdicken
Probe0: 1. Oberfläche: 6 µm, 2. Oberfläche 0 µm,
Probe1: 1. Oberfläche: 6 µm, 2. Oberfläche 0 µm,
Probe2: 1. Oberfläche: 4 µm, 2. Oberfläche 2 µm,
Probe3: 1. Oberfläche: 4 µm, 2. Oberfläche 2 µm.
Von jeder der Probenart wurden mehrere Exemplare hergestellt. Zur Prüfung der Langzeitstabilität wurden 18 Sandwich-Aufbauten jeweils zweier gleicher Proben hergestellt.

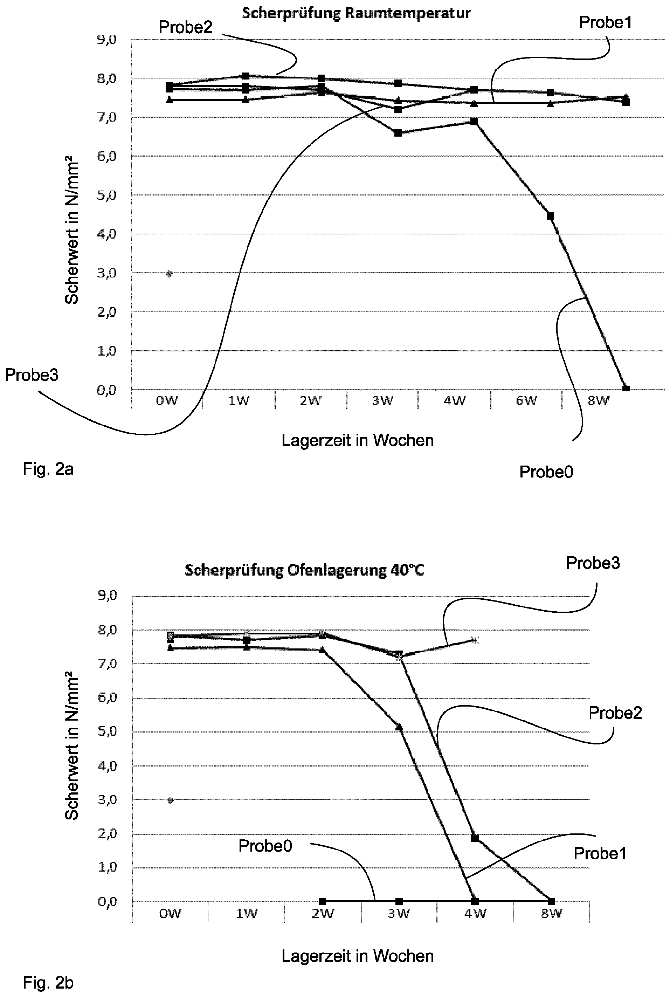

Jeweils zwei Proben gleicher Art wurden mit einer Plattenpresse mit 200 mm x 200 mm Plattenfläche mit einem Flächendruck von 3 N/mm² verklebt, wobei die Aktivierung des Klebers in einem Ofen mittels Erwärmens auf 120 Grad Celsius und Halten bei 120 Grad Celsius für 30 Minuten erfolgte. Anschließend wurden 8 Proben in einen Ofen gelegt und dort bei 40 Grad Celsius gelagert. Nach jeder vergangenen Woche wurde eine Probe entnommen und es wurde eine Scherwertprüfung (in Anlehnung an DIN EN 1465) durchgeführt. Außerdem wurde jede Woche eine Scherwertprüfung von bei Raumtemperatur gelagerten Proben durchgeführt. Die Ergebnisse der Prüfung sind in Figs. 2a und 2b dargestellt.

Den Ergebnissen ist zu entnehmen, dass bei Raumtemperatur die vorteilhaft verwendete Zusammensetzung bessere Schwerwerte aufweist als die Referenzproben Probe0, Probe1 und Probe2. Die nach sechs Wochen geprüfte Probe0 wies einen deutlich reduzierten Scherwert auf, nach 8 Wochen wies Probe 0 einen Scherwert von 0 auf.

Die Lagerung bei 40 Grad Celsius führt bei der Referenzprobe Probe0 spätestens nach einer Woche zu einem Schwerwert von 0, die Probe weist also keine Lagerstabilität bei 40 Grad Celsius auf. Die Probe1 und Probe2 wiesen nach 2 Wochen einen nahezu unverändert guten Scherwert von über 7,0 N/mm² auf, begannen aber ab drei Wochen Lagerung, merklich zu degradieren.

In allen Fällen ist der Scherwert der Probe2 mit beidseitig beschichteter Oberfläche höher als der Scherwert der Probe 1 mit einseitig beschichteter Oberfläche. Dies ist ein Beleg für die besonders vorteilhaften Effekte, die mit beidseitig beschichteten Blechen einhergehen.

Insbesondere ist zu erkennen, dass Probe3 die beste Lagerstabilität aufweist mit nach 4 Wochen bei 40 Grad Celsius Lagerung nahezu unverändert gutem Schwerwert. Als einzige Probe konnte ein Platinen-Sandwich erhalten werden, der auch nach vierwöchiger Lagerung bei 40 Grad Celsius noch einen unverändert guten Scherwert aufwies. Zum Anmeldezeitpunkt dauerten die Versuche noch an.

Es wurden außerdem Versuche durchgeführt an den fertigen Sandwiches, sie wurden auf Prüftemperaturen erwärmt, hiernach nach kurzem Halten unter Wärme ebenfalls einem Scherwerttest unterzogen.

| **Probennummer** | **Probe 2** | | **Probe3** | |
|---|---|---|---|---|
| **Scherwerte [N/mm²]** | | | | |
| jeweils Mittelwert aus 3-fach Prüfung | [N/mm²] | Standardabw. | [N/mm²] | Standardabw. |
| RT | 5,55 | 0,88 | 6,01 | 0,26 |
| 50 Grad Celsius | 5,08 | 1,32 | 5,85 | 0,11 |
| 100 Grad Celsius | 5,38 | 0,27 | 5,59 | 0,12 |
| 150 Grad Celsius | 4,89 | 0,42 | 5,22 | 0,08 |
| 200 Grad Celsius | 4,66 | 0,46 | 4,96 | 0,04 |

Die Ergebnisse zeigen, dass sowohl die Probe2 als auch die Probe3 über einen gewissen Zeitraum auch hohe Temperaturen von bis zu 200 Grad Celsius aushalten können, ohne ihre mechanische Stabilität zu verlieren. Insbesondere zeigt sich aber, dass die Scherwerte der Probe3 signifikant höher und gleichzeitig die Streuung signifikant geringer sind als diejenigen der Vergleichsprobe2.

Probe0 wurde als Referenz der Temperaturprüfung unterzogen, es wurde gezeigt, dass nach einem Erwärmen auf 150 Grad Celsius ein Scherwert von etwa 0,90 N/mm² erhalten wurde. Es zeigte sich somit unter Zugrundelegung der Probe3, dass die vorteilhaften Bleche gegenüber bereits bekannten Blechen zur Herstellung von temperaturstabileren Blechpaketen geeignet sind.

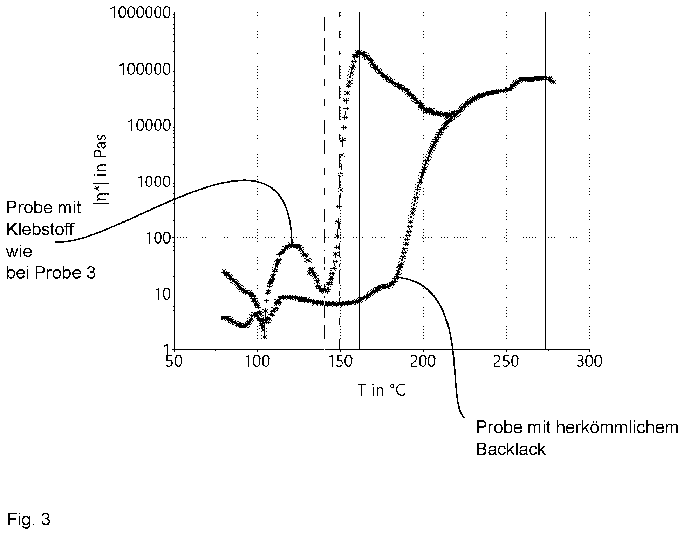

In Fig. 3 ist anhand von durchgeführten Versuchen erkennbar, dass der vorteilhafte Klebstoff, aufweisend die Zusammensetzung wie auch bei Probe3 verwendet, auch bei Temperaturen im Bereich um 100 Grad Celsius signifikant höhere komplexe Viskositäten aufweist als marktübliche Backlacke. Insbesondere ist die komplexe Viskosität unmittelbar vor der Verkettungsreaktion mit einem Wert von 10,74 Pa x s deutlich größer als die einem herkömmlichen Backlack erreichte Werte. Hierdurch wird begünstigt, dass mit einer solchen Klebstoffbeschichtung versehene Bleche in vorteilhafter Weise für ein erfindungsgemäßes Verfahren genutzt werden können und insbesondere auch für seine Weiterbildung, die ein Nachverdichten vorsieht, da keine Verflüssigung des Klebstoffs stattfindet, sondern allenfalls ein Übergang in ein pastöses Verhalten erfolgt. Dadurch ergibt sich, dass kein nennenswertes herausfließen von Klebstoff aus dem Blechpaket zu beobachten ist mit den entsprechenden Vorteilen insbesondere für gute Haftung, nachweisbar beispielsweise mit Kopfzugprüfungen.

Weitere, nicht gezeigte, Versuche ergaben in Langzeitversuchen mit 70 Tagen Dauer, dass Probe3 in ihrer Ölbeständigkeit qualitativ jeder der Proben 0 bis 2 gleichwertig war, das heißt: in Scherwertversuchen wurde nach 70 Tagen Lagerung in einem Öl bei 150 Grad Celsius keine Verringerung der Haftung der Lamellen aneinander festgestellt.

## Patentansprüche

1. Verfahren zum Herstellen eines Blechpakets für eine elektrische Maschine, wobei das Blechpaket bevorzugt entweder ein Stator-Paket oder ein Rotor-Paket ist, aufweisend die folgenden Schritte:
A) Bereitstellen eines mit einer zumindest teilweise aushärtbaren Klebstoffbeschichtung auf Polymerbasis versehenen Blechs oder mehrerer mit einer zumindest teilweise aushärtbaren Klebstoffbeschichtung auf Polymerbasis versehener Bleche,
B) Transportieren des Blechs in eine Inline-Anlage, aufweisend: wenigstens ein Schneidmittel, ein Abtrennmittel sowie ein, bevorzugt zwischen dem wenigstens einen Schneidmittel und dem Abtrennmittel angeordnetes, Aktivierungsmittel zum Aktivieren der Klebstoffbeschichtung,
C) Schneiden eines, bevorzugt als Statorlamelle oder als Rotorlamelle ausgebildeten, Formteils aus dem in Schritt A) bereitgestellten Blech mit dem wenigstens einen Schneidmittel,
D) Aktivieren der Klebstoffbeschichtung des Formteils, bevorzugt des in Schritt C) ausgebildeten Formteils, mittels des Aktivierungsmittels zum Aktivieren der Klebstoffbeschichtung des Formteils,
E) Abtrennen des Formteils von dem Blech mit dem Abtrennmittel,
F) Ablegen des Formteils in einem Positionierbereich zur Bildung eines Formteilstapels,
G) Wiederholen der Schritte C) bis F) zum kontinuierlichen Füllen des Positionierbereichs mit Formteilen, wobei nach einer vorgegebenen erreichten Anzahl von Formteilen bei dem nachfolgenden Formteil vor Durchführen des Schritts F) mittels einer Behandlungsvorrichtung das nachfolgende Formteil wenigstens bereichsweise mit einem Behandlungsfluid versehen wird für eine Wirkverringerung der Klebstoffbeschichtung dieses nachfolgenden Formteils, sodass die Klebstoffbeschichtung dieses nachfolgenden Formteils in dem Positionierbereich infolge der wirkverringerten Klebstoffbeschichtung eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt,
**gekennzeichnet dadurch, dass**
das Aktivierungsmittel ein erstes Infrarotleuchtmittel aufweist und die Klebstoffbeschichtung mit Infrarotstrahlung beleuchtet und dadurch aktiviert wird,
wobei nach Abtrennen eines Stapelabschnitts der Stapelabschnitt in einer Presse nachverdichtet wird mit einem stirnseitigen, das heißt: senkrecht zu der Lamellenoberfläche, vorzugsweise über die Stirnseite gleichmäßig verteilten, Druck zwischen 10000 N/(14000 mm²) und 200000 N/(10000 mm²), vorzugsweise zwischen 50000 N/(14000 mm²) und 150000 N/(10000 mm²), besonders bevorzugt bei einer Temperatur zwischen 30 Grad Celsius und 180 Grad Celsius, vorzugsweise bevorzugt zwischen 40 Grad Celsius und 120 Grad Celsius, noch bevorzugter zwischen 50 Grad Celsius und 100 Grad Celsius.

2. Verfahren nach Anspruch 1, wobei das Aktivierungsmittel ein zweites Infrarotleuchtmittel aufweist, wobei das erste Infrarotleuchtmittel und das zweite Infrarotleuchtmittel Infrarotstrahlung unterschiedlicher Wellenlänge ausstrahlen zur Aktivierung der Klebstoffbeschichtung mit unterschiedlicher Aktivierungstiefe.

3. Verfahren nach Anspruch 2, wobei das erste Infrarotleuchtmittel eine Wellenlänge zwischen 780 nm und 1200 nm emittiert und das zweite Infrarotleuchtmittel eine Wellenlänge zwischen 1200 nm und 3000 nm emittiert.

4. Verfahren nach einem der vorhergehenden Ansprüche, wobei das Aktivierungsmittel Induktionsheizer aufweist.

5. Verfahren nach einem der vorhergehenden Ansprüche, wobei
- das Behandlungsfluid eine Trennflüssigkeit ist und die Behandlungsvorrichtung eine Beschichtungseinheit ist, mit der als Behandlung der Klebstoffbeschichtung die Trennflüssigkeit auf die Klebstoffbeschichtung aufgetragen wird, oder
- das Behandlungsfluid ein Kühlfluid ist und die Behandlungsvorrichtung eine Befeuchtungseinheit ist, mit der als Behandlung der Klebstoffbeschichtung das Kühlfluid, bevorzugt als Kühlflüssigkeit ausgebildet, auf die Klebstoffbeschichtung aufgebracht wird.

6. Verfahren nach einem der vorhergehenden Ansprüche, wobei das Behandlungsfluid eine als Stanzöl ausgebildete Trennflüssigkeit ist.

7. Verfahren nach einem der vorhergehenden Ansprüche, wobei die Klebstoffbeschichtung als wässrige Dispersion auf dem Blech aufgetragen ist und/oder
die Klebstoffbeschichtung eine komplexe Viskosität aufweist, die unmittelbar vor Einsetzen der chemischen Vernetzung wenigstens 8 Pa x s, bevorzugt 10 Pa x s, beträgt.

8. Verfahren nach einem der vorhergehenden Ansprüche, wobei die Klebstoffbeschichtung enthält:
60 Gewichtsteile eines Epoxidharzes in Festharzform,
0,5 bis 15 Gewichtsteile eines latenten Härters,
1 bis 15 Gewichtsteile eines latenten Beschleunigers.

9. Verfahren nach einem der vorhergehenden Ansprüche, wobei das in Schritt A) bereitgestellte Blech beidseitig mit der Klebstoffbeschichtung versehen ist.

10. Verfahren nach einem der vorhergehenden Ansprüche, wobei der latente Beschleuniger ein Harnstoffderivat enthält, insbesondere auch oder ausschließlich einen unsymmetrisch substituierten Harnstoff,
bevorzugt ein N,N-Dimethylharnstoff oder ein N,N'-Dimethylharnstoff oder ein bifunktionelles Harnstoffderivat, besonders bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

11. Verfahren nach Anspruch 10, wobei das Harnstoffderivat ein Stoff 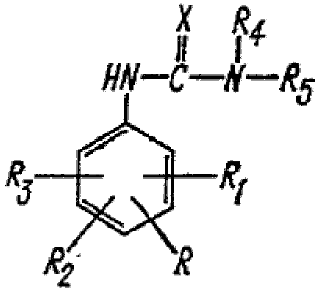 ist mit R: Wasserstoff oder eine Gruppe gemäß 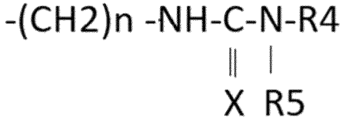 mit
n = 0 oder 1, bevorzugt 1,
X = O oder S, bevorzugt O,
R1, R2 und R3: jeweils Wasserstoff, ein Halogen, NitroGruppe, eine substituierte oder nichtsubstituierte Alkylgruppe, Alkoxylgruppe, Arylgruppe oder Aryloxylgruppe,
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,
R5: wie R4 oder Alkoxylgruppe, R5 optional mit R4 einen heterocyklischen Ring bildend,
oder ein N,N-Dimethyl-N'-(3,4-Dichlorophenyl)Harnstoff oder ein N,N-Dimethyl-N'-(3-chioro-4-methyl-phenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N,N-dimethyl-N' (3-chloro-4-methylphenyl)thio-Harnstoff,
bevorzugt ist das Harnstoffderivat 4,4'-Methylen-bis-(Phenyldimethylharnstoff);
oder eine Mischung aus zwei, drei oder mehreren der vorgenannten.

12. Verfahren nach einem der vorhergehenden Ansprüche, wobei die Schritte C) bis F) mit einer Hubzahl von wenigstens 80/min, bevorzugt zwischen 120/min und 300/min, durchgeführt wird.

13. Verfahren nach einem der vorhergehenden Ansprüche, wobei aus dem mittels Füllens des Positionierbereichs mit Formteilen gebildeten Formteilstapel durch wirkverringerte Klebstoffbeschichtung voneinander getrennte oder mit Sollbruchstelle versehene Stapelabschnitte separat entnommen werden.

## Claims

1. Method for producing a laminated core for an electrical machine, wherein the laminated core is preferably either a stator core or a rotor core, comprising the following steps:
A) providing a metal sheet provided with an at least partially curable polymer-based adhesive coating, or a plurality of metal sheets provided with an at least partially curable polymer-based adhesive coating,
B) transporting the metal sheet into an in-line installation comprising: at least one cutting means, a severing means and an activation means for activating the adhesive coating, said activation means preferably being arranged between the at least one cutting means and the severing means,
C) cutting a shaped part, preferably designed as a stator lamination or as a rotor lamination, out of the metal sheet provided in step A) using the at least one cutting means,
D) activating the adhesive coating of the shaped part, preferably of the shaped part formed in step C), by means of the activation means for activating the adhesive coating of the shaped part,
E) severing the shaped part from the metal sheet using the severing means,
F) depositing the shaped part in a positioning region to form a stack of shaped parts,
G) repeating steps C) to F) in order to continuously fill the positioning region with shaped parts, wherein, after a predetermined number of shaped parts has been reached, in the case of the subsequent shaped part, before step F) is carried out, the subsequent shaped part is provided at least in regions with a treatment fluid by means of a treatment device for a reduction of the effect of the adhesive coating of said subsequent shaped part, such that the adhesive coating of said subsequent shaped part in the positioning region, as a result of the effect-reduced adhesive coating, brings about an improved separability of a stack portion below the effect-reduced adhesive coating from a stack portion above the effect-reduced adhesive coating,
**characterized in that**
the activation means comprises a first infrared illuminant and the adhesive coating is illuminated with infrared radiation and is thereby activated,
wherein, after severing of a stack portion, the stack portion is post-compacted in a press with a pressure applied at the end face, that is to say: perpendicular to the lamination surface, said pressure preferably being distributed uniformly over the end face, of between 10000 N/(14000 mm²) and 200000 N/(10000 mm²), preferably between 50000 N/(14000 mm²) and 150000 N/(10000 mm²), particularly preferably at a temperature between 30 degrees Celsius and 180 degrees Celsius, preferably between 40 degrees Celsius and 120 degrees Celsius, even more preferably between 50 degrees Celsius and 100 degrees Celsius.

2. Method according to claim 1, wherein the activation means comprises a second infrared illuminant, wherein the first infrared illuminant and the second infrared illuminant emit infrared radiation of different wavelengths in order to activate the adhesive coating with different activation depth.

3. Method according to claim 2, wherein the first infrared illuminant emits a wavelength between 780 nm and 1200 nm and the second infrared illuminant emits a wavelength between 1200 nm and 3000 nm.

4. Method according to any one of the preceding claims, wherein the activation means comprises induction heaters.

5. Method according to any one of the preceding claims, wherein
- the treatment fluid is a separating liquid and the treatment device is a coating unit by means of which, as treatment of the adhesive coating, the separating liquid is applied onto the adhesive coating, or
- the treatment fluid is a cooling fluid and the treatment device is a moistening unit by means of which, as treatment of the adhesive coating, the cooling fluid, preferably designed as cooling liquid, is applied onto the adhesive coating.

6. Method according to any one of the preceding claims, wherein the treatment fluid is a separating liquid designed as a stamping oil.

7. Method according to any one of the preceding claims,
wherein the adhesive coating is applied onto the metal sheet as an aqueous dispersion, and/or
wherein the adhesive coating has a complex viscosity which, immediately before the onset of the chemical crosslinking, amounts to at least 8 Pa x s, preferably 10 Pa x s.

8. Method according to any one of the preceding claims, wherein the adhesive coating contains:
60 parts by weight of an epoxy resin in solid resin form,
0.5 to 15 parts by weight of a latent hardener,
1 to 15 parts by weight of a latent accelerator.

9. Method according to any one of the preceding claims, wherein the metal sheet provided in step A) is provided with the adhesive coating on both sides.

10. Method according to any one of the preceding claims, wherein the latent accelerator contains a urea derivative, in particular additionally or exclusively an unsymmetrically substituted urea,
preferably an N,N-dimethylurea or an N,N'-dimethylurea or a bifunctional urea derivative, particularly preferably having two urea groups as functional groups, in the specific case particularly preferably a 4,4'-methylene-bis-(phenyldimethylurea), or a mixture of several of the aforementioned.

11. Method according to claim 10, wherein the urea derivative is a substance 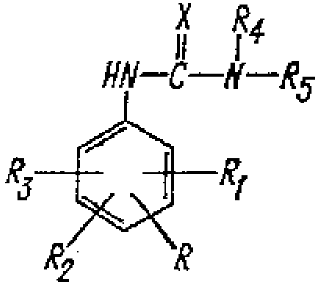 with R: hydrogen or a group according to 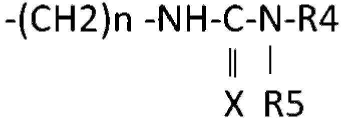 with
n = 0 or 1, preferably 1,
X = O or S, preferably O,
R1, R2 and R3: in each case hydrogen, a halogen, nitro group, a substituted or unsubstituted alkyl group, alkoxyl group, aryl group or aryloxyl group,
R4: alkyl group, alkenyl group, cycloalkyl group, cycloalkenyl group, aralkyl group, optionally substituted by a halogen, hydroxyl or cyano, preferably methyl, ethyl, propyl, butyl, particularly preferably methyl,
R5: as R4 or alkoxyl group, R5 optionally forming a heterocyclic ring with R4,
or an N,N-dimethyl-N'-(3,4-dichlorophenyl)urea or an N,N-dimethyl-N'-(3-chioro-4-methyl-phenyl)urea or an N,N-dimethyl-N'-(3-chloro-4-methoxyphenyl)urea or an N,N-dimethyl-N'-(3-chloro-4-ethylphenyl)urea or an N,N-dimethyl-N'-(4-methyl-3-nitrophenyl)urea or an N-(N'-3,4-dichlorophenylcarbamoyl)morpholine or an N,N-dimethyl-N'-(3-chloro-4-methylphenyl)thiourea,
preferably the urea derivative is 4,4'-methylene-bis-(phenyldimethylurea);
or a mixture of two, three or more of the aforementioned.

12. Method according to any one of the preceding claims, wherein steps C) to F) are carried out with a stroke rate of at least 80/min, preferably between 120/min and 300/min.

13. Method according to any one of the preceding claims, wherein stack portions which are separated from one another by an effect-reduced adhesive coating or which are provided with a predetermined breaking point are removed separately from the stack of shaped parts formed by filling the positioning region with shaped parts.

## Revendications

1. Procédé de fabrication d'un paquet de tôles pour une machine électrique, dans lequel le paquet de tôles est de préférence soit un paquet de stator, soit un paquet de rotor, comprenant les étapes suivantes :
A) mise à disposition d'une tôle pourvue d'un revêtement adhésif à base de polymère au moins partiellement durcissable, ou de plusieurs tôles pourvues d'un revêtement adhésif à base de polymère au moins partiellement durcissable,
B) transport de la tôle dans une installation en ligne comprenant : au moins un moyen de coupe, un moyen de détachement ainsi qu'un moyen d'activation destiné à activer le revêtement adhésif, ledit moyen d'activation étant de préférence disposé entre l'au moins un moyen de coupe et le moyen de détachement,
C) découpe, dans la tôle mise à disposition à l'étape A), d'une pièce façonnée réalisée de préférence sous forme de lamelle de stator ou de lamelle de rotor, au moyen de l'au moins un moyen de coupe,
D) activation du revêtement adhésif de la pièce façonnée, de préférence de la pièce façonnée réalisée à l'étape C), au moyen du moyen d'activation destiné à activer le revêtement adhésif de la pièce façonnée,
E) détachement de la pièce façonnée de la tôle au moyen du moyen de détachement,
F) dépôt de la pièce façonnée dans une zone de positionnement en vue de la formation d'un empilement de pièces façonnées,
G) répétition des étapes C) à F) en vue du remplissage continu de la zone de positionnement avec des pièces façonnées, dans lequel, après qu'un nombre prédéfini de pièces façonnées a été atteint, pour la pièce façonnée suivante, avant la réalisation de l'étape F), la pièce façonnée suivante est pourvue, au moins par zones, d'un fluide de traitement au moyen d'un dispositif de traitement, en vue d'une réduction de l'effet du revêtement adhésif de cette pièce façonnée suivante, de sorte que le revêtement adhésif de cette pièce façonnée suivante dans la zone de positionnement, du fait du revêtement adhésif à effet réduit, produit une séparabilité améliorée d'une portion d'empilement située en dessous du revêtement adhésif à effet réduit d'avec une portion d'empilement située au-dessus du revêtement adhésif à effet réduit,
**caractérisé en ce que**
le moyen d'activation présente un premier moyen d'éclairage infrarouge et le revêtement adhésif est éclairé par un rayonnement infrarouge et est ainsi activé,
dans lequel, après le détachement d'une portion d'empilement, la portion d'empilement est post-compactée dans une presse avec une pression frontale, c'est-à-dire : perpendiculaire à la surface de la lamelle, de préférence répartie uniformément sur la face frontale, comprise entre 10000 N/(14000 mm²) et 200000 N/(10000 mm²), de préférence comprise entre 50000 N/(14000 mm²) et 150000 N/(10000 mm²), de manière particulièrement préférée à une température comprise entre 30 degrés Celsius et 180 degrés Celsius, de préférence entre 40 degrés Celsius et 120 degrés Celsius, de manière encore plus préférée entre 50 degrés Celsius et 100 degrés Celsius.

2. Procédé selon la revendication 1, dans lequel le moyen d'activation présente un deuxième moyen d'éclairage infrarouge, dans lequel le premier moyen d'éclairage infrarouge et le deuxième moyen d'éclairage infrarouge émettent un rayonnement infrarouge de longueur d'onde différente en vue de l'activation du revêtement adhésif avec une profondeur d'activation différente.

3. Procédé selon la revendication 2, dans lequel le premier moyen d'éclairage infrarouge émet une longueur d'onde comprise entre 780 nm et 1200 nm et le deuxième moyen d'éclairage infrarouge émet une longueur d'onde comprise entre 1200 nm et 3000 nm.

4. Procédé selon l'une quelconque des revendications précédentes, dans lequel le moyen d'activation présente des dispositifs de chauffage par induction.

5. Procédé selon l'une quelconque des revendications précédentes, dans lequel
- le fluide de traitement est un liquide de séparation et le dispositif de traitement est une unité de revêtement au moyen de laquelle, en tant que traitement du revêtement adhésif, le liquide de séparation est appliqué sur le revêtement adhésif, ou
- le fluide de traitement est un fluide de refroidissement et le dispositif de traitement est une unité d'humidification au moyen de laquelle, en tant que traitement du revêtement adhésif, le fluide de refroidissement, réalisé de préférence sous forme de liquide de refroidissement, est appliqué sur le revêtement adhésif.

6. Procédé selon l'une quelconque des revendications précédentes, dans lequel le fluide de traitement est un liquide de séparation réalisé sous forme d'huile d'estampage.

7. Procédé selon l'une quelconque des revendications précédentes, dans lequel le revêtement adhésif est appliqué sur la tôle sous forme de dispersion aqueuse, et/ou
le revêtement adhésif présente une viscosité complexe qui, immédiatement avant le début de la réticulation chimique, est d'au moins 8 Pa x s, de préférence de 10 Pa x s.

8. Procédé selon l'une quelconque des revendications précédentes, dans lequel le revêtement adhésif contient :
60 parties en poids d'une résine époxy sous forme de résine solide,
0,5 à 15 parties en poids d'un durcisseur latent,
1 à 15 parties en poids d'un accélérateur latent.

9. Procédé selon l'une quelconque des revendications précédentes, dans lequel la tôle mise à disposition à l'étape A) est pourvue du revêtement adhésif sur ses deux faces.

10. Procédé selon l'une quelconque des revendications précédentes, dans lequel l'accélérateur latent contient un dérivé d'urée, en particulier également ou exclusivement une urée substituée de manière asymétrique,
de préférence une N,N-diméthylurée ou une N,N'-diméthylurée ou un dérivé d'urée bifonctionnel, de manière particulièrement préférée comportant deux groupes urée en tant que groupes fonctionnels, dans le cas spécifique de manière particulièrement préférée une 4,4'-méthylène-bis-(phényldiméthylurée), ou un mélange de plusieurs des composés précités.

11. Procédé selon la revendication 10, dans lequel le dérivé d'urée est une substance 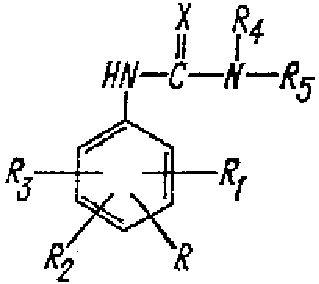 avec R : hydrogène ou un groupe selon 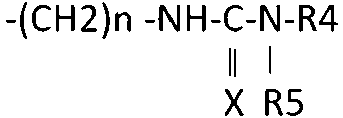 avec
n = 0 ou 1, de préférence 1,
X = O ou S, de préférence O,
R1, R2 et R3 : respectivement hydrogène, un halogène, un groupe nitro, un groupe alkyle, alcoxyle, aryle ou aryloxyle substitué ou non substitué,
R4 : groupe alkyle, groupe alcényle, groupe cycloalkyle, groupe cycloalcényle, groupe aralkyle, éventuellement substitué par un halogène, un hydroxyle ou un cyano, de préférence méthyle, éthyle, propyle, butyle, de manière particulièrement préférée méthyle,
R5 : comme R4 ou groupe alcoxyle, R5 formant éventuellement un cycle hétérocyclique avec R4,
ou une N,N-diméthyl-N'-(3,4-dichlorophényl)urée ou une N,N-diméthyl-N'-(3-chloro-4-méthyl-phényl)urée ou une N,N-diméthyl-N'-(3-chloro-4-méthoxyphényl)urée ou une N,N-diméthyl-N'-(3-chloro-4-éthylphényl)urée ou une N,N-diméthyl-N'-(4-méthyl-3-nitrophényl)urée ou une N-(N'-3,4-dichlorophénylcarbamoyl)morpholine ou une N,N-diméthyl-N'-(3-chloro-4-méthylphényl)thiourée, de préférence le dérivé d'urée est la 4,4'-méthylène-bis-(phényldiméthylurée) ; ou un mélange de deux, trois ou plusieurs des composés précités.

12. Procédé selon l'une quelconque des revendications précédentes, dans lequel les étapes C) à F) sont réalisées avec un nombre de courses d'au moins 80/min, de préférence compris entre 120/min et 300/min.

13. Procédé selon l'une quelconque des revendications précédentes, dans lequel des portions d'empilement séparées les unes des autres par un revêtement adhésif à effet réduit ou pourvues d'un point de rupture prédéterminé sont prélevées séparément de l'empilement de pièces façonnées formé par remplissage de la zone de positionnement avec des pièces façonnées.
